# EUROPEAN PATENT APPLICATION

(11) **EP 4 553 962 A1**
(43) Date of publication of application: **14.05.2025**
(21) Application number: 23852436.7
(22) Date of filing: 01.08.2023
(51) Int. Cl.: H01M 50/105, H01G 11/12, H01G 11/78, H01G 11/80, H01G 11/84, H01M 10/04, H01M 10/052, H01M 10/058, H01M 50/121, H01M 50/184, H01M 50/186, H01M 50/627

(54) **POWER STORAGE MODULE AND METHOD FOR MANUFACTURING POWER STORAGE MODULE**

(30) Priority: 12.08.2022 JP 2022128991
(71) Applicant: KABUSHIKI KAISHA TOYOTA JIDOSHOKKI, Kariya-shi, Aichi 448-8671 (JP)
(72) Inventor: OKAMOTO, Yuki, Kariya-shi, Aichi 448-8671 (JP); HIROSE, Takayuki, Kariya-shi, Aichi 448-8671 (JP); ISHIGURO, Fumihiko, Kariya-shi, Aichi 448-8671 (JP); KAMIYA, Ryota, Kariya-shi, Aichi 448-8671 (JP); NAKAMURA, Tomohiro, Kariya-shi, Aichi 448-8671 (JP)
(74) Representative: TBK
(86) International application number: PCT/JP2023/028128
(87) International publication number: WO 2024/034465

(57) **Abstract**

A power storage module includes an electrode laminate, a sealing body provided for the electrode laminate, and an injected resin portion bonded to the sealing body. Each of the plurality of electrodes includes a current collector having a rectangular shape when viewed in a first direction. The sealing body includes a welded end where outer peripheral edges of a plurality of frame-shaped members are welded to each other, and a plurality of communication holes communicating with an outside of an injection port surface at the welded end. The injected resin portion includes a main body portion partially covering the injection port surface, and a plurality of protruding frame portions surrounding openings connected to the plurality of communication holes when viewed in a second direction intersecting the injection port surface.

## Description

### Technical Field

The present disclosure relates to a power storage module and a method for manufacturing the power storage module.

### Background Art

Patent Literature 1 discloses a power storage module. The power storage module includes an electrode laminate and a frame provided in such a way as to surround the electrode laminate over an entire circumference when viewed in a stacking direction. The electrode laminate includes a plurality of electrode plates stacked with separators interposed therebetween. The frame has through holes penetrating to an internal space formed between adjacent electrode plates. The through holes function as injection ports for injecting an electrolyte solution into the internal space. Such a frame is, for example, an injected resin body formed through injection molding.

### Citation List

### Patent Literature

Patent Literature 1: Japanese Unexamined Patent Publication No. 2021-86674

### Summary of Invention

### Technical Problem

As described above, in a configuration in which injection ports are provided in an injected resin body surrounding an electrode laminate over an entire circumference, it is possible that size of the power storage module becomes large when manufacturing a power storage apparatus including large-area electrodes. Furthermore, in this case, size of a required mold also increases, which can lead to an increase in production cost.

The present disclosure provides a power storage module and a method for manufacturing the power storage module capable of suppressing an increase in size of the power storage module and an increase in size of a mold required to manufacture the power storage module.

### Solution to Problem

A power storage module according to an aspect of the present disclosure includes an electrode laminate including a plurality of electrodes stacked in a first direction, the electrode laminate including a sealing body provided in such a way as to form internal spaces between the electrodes adjacent to each other and seal the internal spaces, and an injected resin portion bonded to the sealing body. Each of the plurality of electrodes includes a current collector having a rectangular shape when viewed in a first direction. The sealing body includes a welded end where outer peripheral edges of a plurality of frame-shaped members interposed between the plurality of current collectors and stacked in the first direction are welded to each other. The welded end surrounds the plurality of current collectors when viewed in the first direction, and has four outer side surfaces extending in the first direction. The sealing body includes a first end surface and a second end surface, which are both end surfaces of the electrode laminate in the first direction, an injection port surface, which is one of the four outer side surfaces and to which the injected resin portion is bonded, and a plurality of communication holes through which an outside of the injection port surface communicates with each of the plurality of internal spaces. The injected resin portion includes a main body portion having a plurality of openings connected to the plurality of communication holes, the main body portion partially covering the injection port surface, a first overhang portion connected to the main body portion and partially covering the first end surface, and a second overhang portion connected to the main body portion and partially covering the second end surface. The main body portion includes a plurality of protruding frame portions protruding in a second direction intersecting the injection port surface, and the plurality of protruding frame portions surrounds the plurality of openings when viewed in the second direction.

In the power storage module, the communication holes penetrating to the internal spaces are provided at the welded end of the sealing body formed at an outer peripheral edge of the electrode laminate. The injected resin portion including frame portions surrounding the communication holes is bonded to the sealing body. The injected resin portion includes the main body portion covering the injection port surface, which is one of the four outer side surfaces forming the welded end, the first overhang portion extending from the main body portion to the first end surface of the electrode laminate, and the second overhang portion extending from the main body portion to the second end surface of the electrode laminate. As described above, since the injected resin portion is provided for only one of the four outer side surfaces, an increase in size of the power storage module is suppressed. In addition, the injected resin portion does not require a mold large enough to surround an entire periphery of the electrode laminate, and can be formed by a mold only large enough to partially cover the injection port surface. It is therefore possible to suppress an increase in size of the mold required for the manufacture.

An example of the injected resin portion may include a first thin portion connected to the main body portion and bonded to the injection port surface from the main body portion along the injection port surface, and thickness of the first thin portion in the second direction may be smaller than thickness of the main body portion in the second direction.

Another example of the injected resin portion may include a second thin portion connected to the first overhang portion and bonded to the first end surface from the first overhang portion along the first end surface, and thickness of the second thin portion in the first direction may be smaller than thickness of the first overhang portion in the first direction.

One example of the plurality of current collectors may include a first region provided at a center of the current collectors when viewed in the first direction and provided with active material layers, and a frame-shaped second region outside the first region, and the frame-shaped members may include a plurality of frame-shaped sealing materials provided in the second region of the plurality of current collectors, and a plurality of spacers interposed between the sealing materials adjacent to each other in the first direction and defining, together with the plurality of sealing materials, the internal spaces between the current collectors adjacent to each other in the first direction.

A method for manufacturing a power storage module according to another aspect of the present disclosure includes the steps of preparing an electrode laminate including a plurality of electrodes stacked in a first direction and having both end surfaces in the first direction as a first end surface and a second end surface, providing a welded end on the electrode laminate such that internal spaces are formed between the electrodes adjacent to each other, and providing an injected resin portion at the welded end. Each of the plurality of electrodes includes a current collector having a rectangular shape when viewed in a first direction. The step of providing the welded end includes a step of welding outer peripheral edges of a plurality of frame-shaped members stacked in the first direction while being interposed between the current collectors adjacent to each other in the first direction. An injection port surface, which is one of four outer side surfaces of the welded end opposite the internal spaces, has a plurality of communication holes communicating with the plurality of internal spaces. The step of providing the injected resin portion includes the steps of attaching a mold partially covering the injection port surface to the electrode laminate in such a way as to form a continuous molding space between, in the injection port surface, a main body region including the plurality of communication holes, a first overhang region connected to the main body region and partially extending on the first end surface of the electrode laminate, and a second overhang region connected to the main body region and partially extending on the second end surface of the electrode laminate, and injecting a resin into the molding space of the mold attached to the electrode laminate.

In the method for manufacturing a power storage module, the power storage module is manufactured in which the communication holes penetrating to the internal spaces are provided at the welded end of the sealing body formed at an outer peripheral edge of the electrode laminate. The injected resin portion including frame portions surrounding the communication holes is bonded to the sealing body. In the step of attaching the mold to the electrode laminate, the mold is attached in such a way as to form a molding space between the main body region extending to the injection port surface, which is one of the four outer side surfaces forming the welded end, the first overhang region extending from the main body portion to the first end surface of the electrode laminate, and the second overhang region extending from the main body portion to the second end surface of the electrode laminate. In this case, the injected resin portion can be formed by a mold only large enough to partially cover one of the outer side surfaces of the electrode laminate without requiring a mold large enough to surround an entire periphery of the electrode laminate. It is therefore possible to suppress an increase in size of the mold required for the manufacture. In addition, it is possible to suppress an increase in size of the power storage module to be manufactured.

In an example, in the step of attaching the mold, a first thin space connected to the molding space and extending from the molding space along the injection port surface may be formed, and thickness of the first thin space in a second direction intersecting the injection port surface may be smaller than thickness, in the second direction, of the molding space in the main body region.

In another example, in the step of attaching the mold, a second thin space connected to the molding space and extending from the first overhang region along the first end surface may be formed, and thickness of the second thin space in the first direction may be smaller than thickness, in the first direction, of the molding space in the first overhang region.

The current collectors may include a first region provided at a center of the current collectors when viewed from the first direction and provided with active material layers, and a frame-shaped second region outside the first region, the frame-shaped members may include a plurality of frame-shaped sealing materials provided in the second region of the plurality of current collectors, and a plurality of spacers interposed between the sealing materials adjacent to each other in the first direction and defining, together with the plurality of sealing materials, the internal spaces between the current collectors, the electrode laminate may include a plurality of separators disposed between the current collectors adjacent to each other in the first direction, the plurality of separators having outer edges disposed between the plurality of sealing materials and the plurality of spacers, and in the step of attaching the mold, a region of the electrode laminate where the plurality of current collectors, the plurality of sealing materials, the plurality of spacers, and the plurality of separators overlap when viewed in the first direction may be sandwiched by the mold.

An example of the mold may include a first mold and a second mold that sandwich the electrode laminate in the first direction, and surface roughness of a surface of the first mold in contact with the electrode laminate and a surface of the second mold in contact with the electrode laminate may be greater than surface roughness of a surface of the mold forming the molding space.

### Advantageous Effects of Invention

According to the present disclosure, it is possible to provide a power storage module capable of suppressing an increase in size of a mold required to manufacture the power storage module and an increase in size of the power storage module, and a method for manufacturing the power storage module.

### Brief Description of Drawings

FIG. 1 is a schematic plan view of an example of a power storage module.
FIG. 2 is a schematic cross-sectional view of the example of the power storage module.
FIG. 3 is a schematic front view of the example of the power storage module.
FIG. 4 is another schematic cross-sectional view of the example of the power storage module.
FIG. 5 is another schematic cross-sectional view of the example of the power storage module.
FIG. 6 is another schematic cross-sectional view of the example of the power storage module.
FIG. 7 is a flow illustrating an example of a method for manufacturing a power storage module.
FIG. 8 is a plan view illustrating a position of a mold attached to the example of the power storage module.
FIG. 9 is a schematic cross-sectional view of an example of the mold.
FIG. 10 is another schematic cross-sectional view of the example of the mold.
FIG. 11 is another schematic cross-sectional view of the example of the mold.
FIG. 12 is a diagram illustrating a contact surface of the mold with respect to an electrode laminate.
FIG. 13 is a schematic plan view of another example of the power storage module.
FIG. 14 is a schematic cross-sectional view of the power storage module illustrated in FIG. 13.
FIG. 15 is a schematic cross-sectional view of a mold illustrated in FIG. 13.
FIG. 16 is a schematic plan view of yet another example of the power storage module.
FIG. 17 is a schematic cross-sectional view of a mold illustrated in FIG. 16.
FIG. 18 is a schematic cross-sectional view of yet another example of the power storage module.
FIG. 19 is a diagram illustrating another example of the contact surface of the mold with respect to the electrode laminate.

### Description of Embodiments

An embodiment will be described hereinafter with reference to the drawings. Note that, in description of the drawings, the same or equivalent elements are given the same reference numerals, and redundant description thereof might be omitted. Furthermore, in the description, a Cartesian coordinate system defined by an X-axis, a Y-axis, and a Z-axis illustrated in the drawings can be referred to.

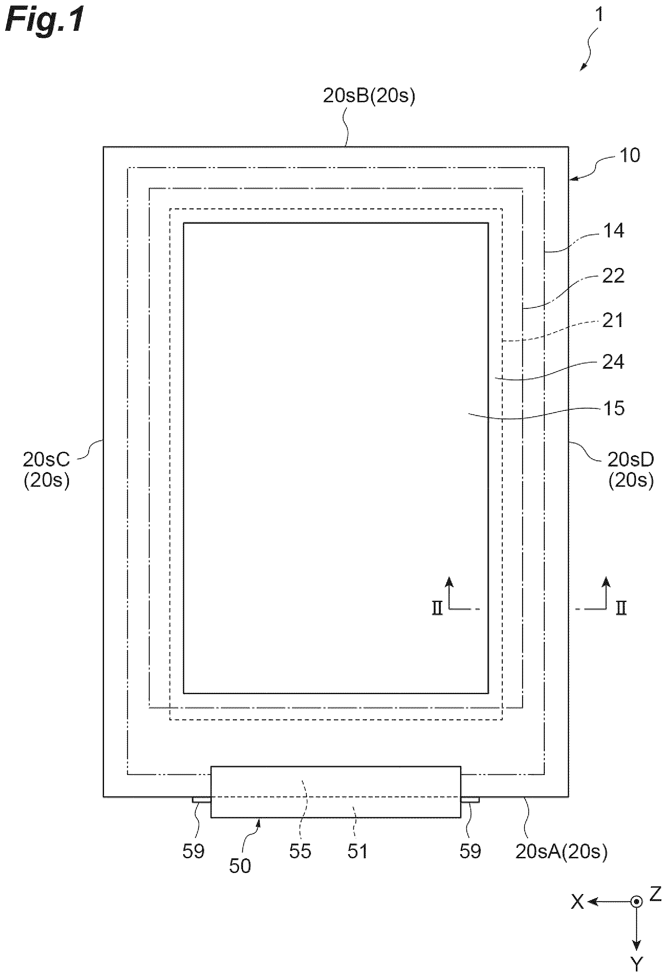

FIG. 1 is a schematic plan view of a power storage module according to the present embodiment. The power storage module 1 is, for example, a power storage module used for a battery of one of various vehicles including a forklift, a hybrid vehicle, and an electric vehicle. The power storage module 1 is, for example, a secondary battery such as a nickel-metal hydride secondary battery or a lithium-ion secondary battery. The power storage module 1 may be an electric double-layer capacitor or an all-solid-state battery. Here, a case where the power storage module 1 is a lithium-ion secondary battery will be described.

The power storage module 1 includes an electrode laminate 10 and an injected resin portion 50. The electrode laminate 10 has a rectangular shape when viewed in a Z-axis direction (first direction). The electrode laminate 10 has four outer side surfaces 20s. The injected resin portion 50 is bonded to an outer side surface 20sA (injection port surface) among the four outer side surfaces 20s. Among other three outer side surfaces 20sB, 20sC, and 20sD, the outer side surface 20sB is a surface opposite the outer side surface 20sA. The outer side surface 20sC and the outer side surface 20sD are surfaces connecting the outer side surface 20sA and the outer side surface 20sB to each other. In the illustrated example, when viewed in the Z-axis direction, the outer side surfaces 20sA and 20sB constitute short sides, and the outer side surfaces 20sC and 20sD constitute long sides. For example, the power storage module may have a rectangular shape having a size of about 300 mm × 700 mm to 1300 mm × 2000 mm when viewed in the Z-axis direction.

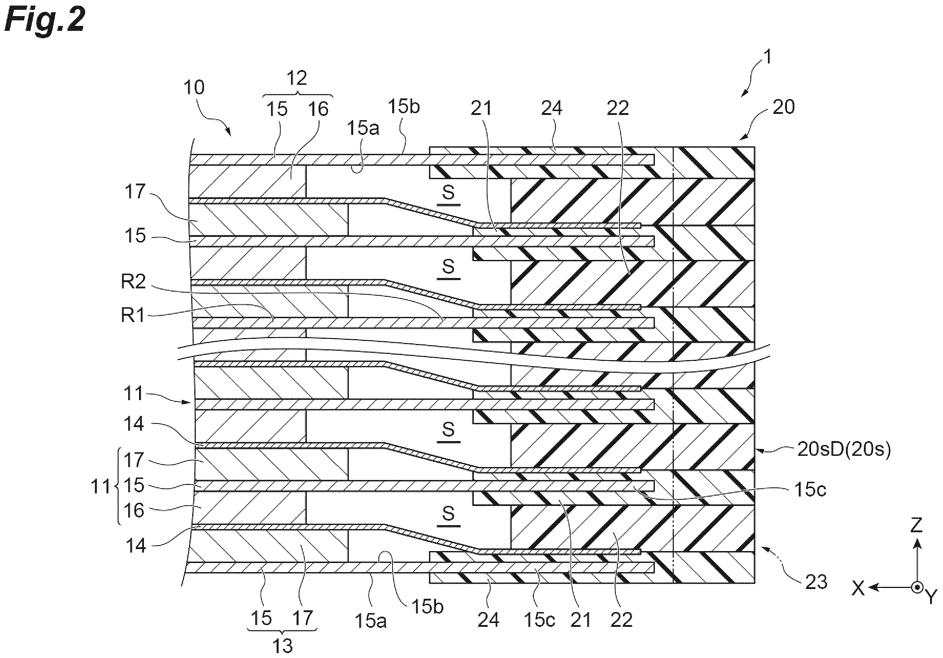

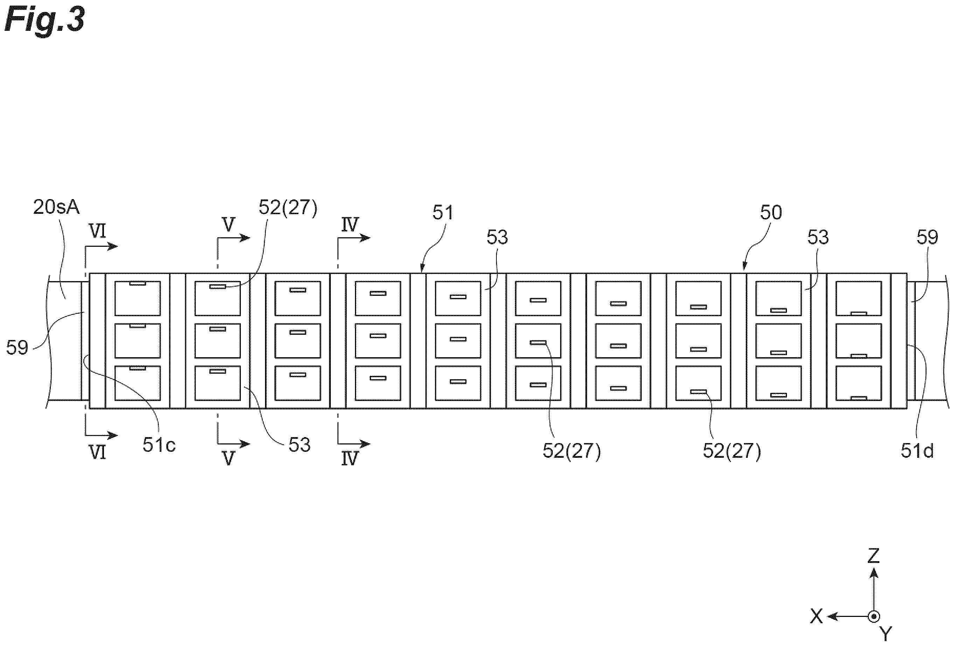

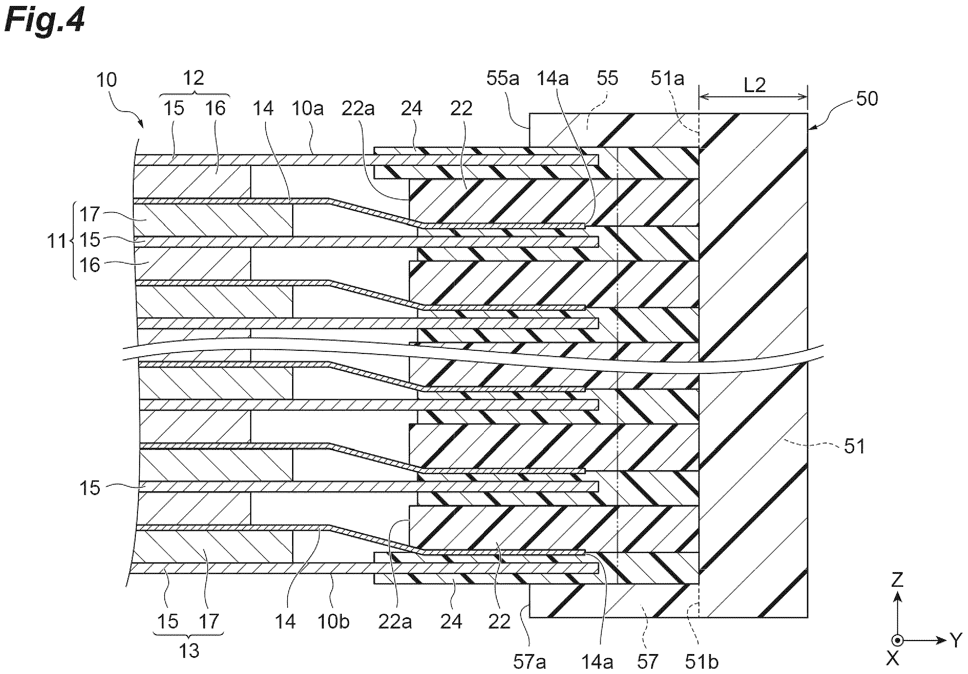

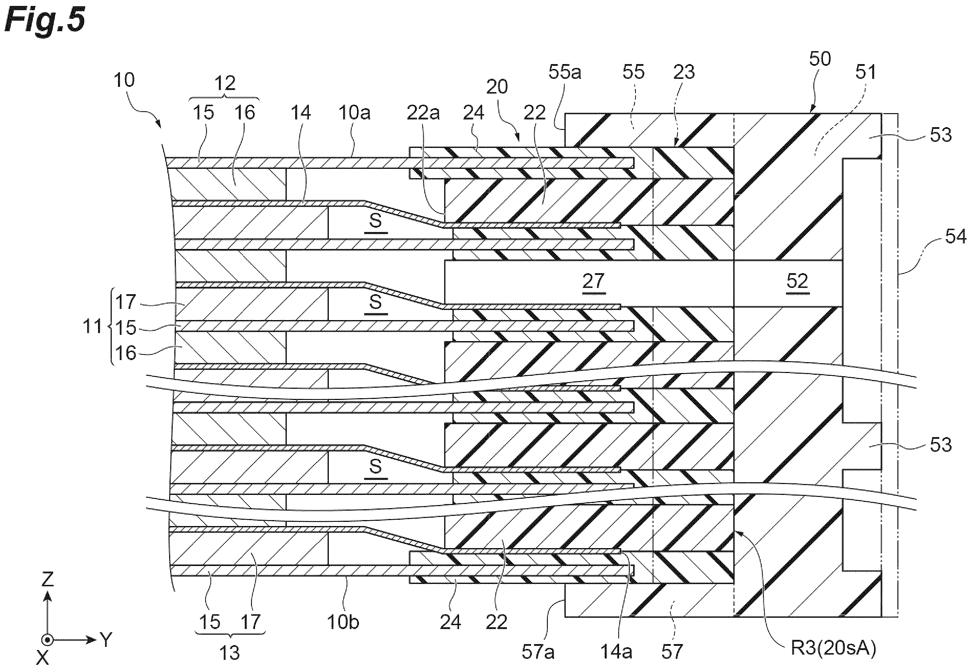

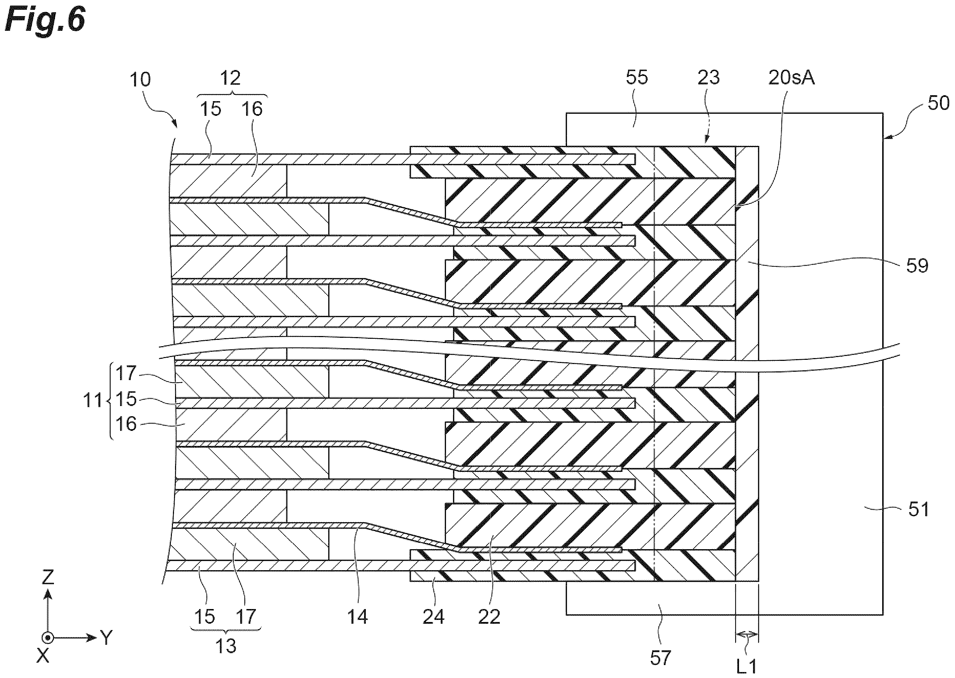

FIG. 2 is a cross-sectional view taken along line II-II in FIG. 1, and illustrates the vicinity of the outer side surface 20sD. Note that, in the vicinity of the outer side surfaces 20sB and 20sC, too, cross sections similar to that in FIG. 2 are obtained. FIG. 3 is a front view of the injected resin portion 50, and illustrates a part of the outer side surface 20sA. FIG. 4 is a cross section taken along line IV-IV in FIG. 3, FIG. 5 is a cross section taken along line V-V in FIG. 3, and FIG. 6 is a cross section taken along line VI-VI in FIG. 3.

The electrode laminate 10 includes a plurality of electrodes stacked in the Z-axis direction. The Z-axis direction is a direction in which the electrodes are stacked and is a height direction of the power storage module 1. The plurality of electrodes includes a plurality of bipolar electrodes 11, a positive electrode terminal electrode 12, and a negative electrode terminal electrode 13. A separator 14 is interposed between electrodes adjacent to each other.

Each bipolar electrode 11 includes a current collector 15, a positive electrode active material layer 16, and a negative electrode active material layer 17. The current collector 15 has a rectangular shape when viewed in the Z-axis direction, and has a sheet shape. The current collector 15 has a first region R1 in which active material layers (the positive electrode active material layer 16 and the negative electrode active material layer 17) are formed, and a frame-shaped second region R2 outside the first region R1. The first region R1 is provided at a center of the current collector 15 when viewed in the Z-axis direction. The positive electrode active material layer 16 is provided on a first surface 15a of the current collector 15. The negative electrode active material layer 17 is provided on a second surface 15b of the current collector 15. The plurality of bipolar electrodes 11 is stacked such that the positive electrode active material layer 16 of one bipolar electrode 11 and the negative electrode active material layer 17 of another bipolar electrode 11 adjacent to each other in the stacking direction face each other. Here, the first surface 15a of the current collector 15 is a surface facing one side of the Z-axis direction, and the second surface 15b of the current collector 15 is a surface facing another side of the Z-axis direction.

The positive electrode active material layer 16 and the negative electrode active material layer 17 each have a rectangular shape when viewed in the Z-axis direction. The negative electrode active material layer 17 is slightly larger than the positive electrode active material layer 16 when viewed in the Z-axis direction. In a plan view viewed from the Z-axis direction, an entire formation region of the positive electrode active material layer 16 is located in a formation region of the negative electrode active material layer 17.

The positive electrode terminal electrode 12 includes a current collector 15 and a positive electrode active material layer 16 provided on a first surface 15a of the current collector 15. The positive electrode terminal electrode 12 does not include a positive electrode active material layer 16 or a negative electrode active material layer 17 on a second surface 15b of the current collector 15. That is, no active material layer is provided on the second surface 15b of the current collector 15 of the positive electrode terminal electrode 12. The positive electrode terminal electrode 12 is stacked on one of the bipolar electrodes 11 at an end of the electrode laminate 10 on the other side of the Z-axis direction. The positive electrode terminal electrode 12 is stacked on the bipolar electrode 11 such that the positive electrode active material layer 16 thereof faces the negative electrode active material layer 17 of the bipolar electrode 11.

The negative electrode terminal electrode 13 includes a current collector 15 and a negative electrode active material layer 17 provided on a second surface 15b of the current collector 15. The negative electrode terminal electrode 13 does not include a positive electrode active material layer 16 or a negative electrode active material layer 17 on a first surface 15a of the current collector 15. That is, no active material layer is provided on the first surface 15a of the current collector 15 of the negative electrode terminal electrode 13. The negative electrode terminal electrode 13 is stacked on one of the bipolar electrodes 11 at an end of the electrode laminate 10 on the one side of the Z-axis direction. The negative electrode terminal electrode 13 is stacked on the bipolar electrode 11 such that the negative electrode active material layer 17 thereof faces the positive electrode active material layer 16 of the bipolar electrode 11.

The separators 14 are disposed between adjacent bipolar electrodes 11, between the positive electrode terminal electrode 12 and the bipolar electrode 11, and between the negative electrode terminal electrode 13 and the bipolar electrode 11. Each separator 14 is interposed between the positive electrode active material layer 16 and the negative electrode active material layer 17, and isolates the positive electrode active material layer 16 and the negative electrode active material layer 17 from each other. Each separator 14 allows charge carriers such as lithium ions to pass while preventing a short circuit due to contact between adjacent electrodes.

The current collector 15 is a chemically inactive electric conductor for continuously flowing a current through the positive electrode active material layer 16 and the negative electrode active material layer 17 during discharge or charge of the lithium-ion secondary battery. A material of the current collector 15 is, for example, a metal material, a conductive resin material, a conductive inorganic material, or the like. Examples of the conductive resin material include a resin obtained by adding a conductive filler to a conductive polymer material or a non-conductive polymer material as necessary. The current collector 15 may include a plurality of layers. In this case, each layer of the current collector 15 may contain the above-described metal material or conductive resin material.

A covering layer may be formed on a surface of the current collector 15. The covering layer may be formed by a known method such as plating or spray coating. The current collector 15 may have, for example, a plate shape, a foil shape (for example, a metal foil), a film shape, a mesh shape, or the like. Examples of the metal foil include an aluminum foil, a copper foil, a nickel foil, a titanium foil, and a stainless steel foil. Examples of the stainless steel foil include SUS 304, SUS 316, and SUS 301 defined in JIS G 4305:2015. Mechanical strength of the current collector 15 can be secured by using a stainless steel foil as the current collector 15. The current collector 15 may be an alloy foil or a clad foil of the above-mentioned metal. When the current collector 15 has a foil shape, thickness of the current collector 15 may be, for example, 1 µm to 100 µm.

The positive electrode active material layer 16 contains a positive electrode active material capable of occluding and releasing charge carriers such as lithium ions. Examples of the positive electrode active material include a lithium composite metal oxide having a stratified rock salt type structure, a metal oxide having a spinel structure, and a polyanionic compound. The positive electrode active material may be any material that can be used for the lithium-ion secondary battery. The positive electrode active material layer 16 may contain a plurality of the positive electrode active materials. In the present embodiment, the positive electrode active material layer 16 contains olivine lithium iron phosphate (LiFePO₄) as a composite oxide.

The negative electrode active material layer 17 contains a negative electrode active material capable of occluding and releasing charge carriers such as lithium ions. The negative electrode active material may be any of a simple substance, an alloy, or a compound. Examples of the negative electrode active material include Li, carbon, and a metal compound. The negative electrode active material may be an element that can be alloyed with lithium, a compound thereof, or another material. Examples of the carbon include natural graphite, artificial graphite, hard carbon (non-graphitizing carbon), and soft carbon (graphitizing carbon). Examples of the artificial graphite include highly oriented graphite, and meso-carbon microbeads. Examples of the element that can be alloyed with lithium include silicon, and tin. In the present embodiment, the negative electrode active material layer 17 contains graphite as a carbon-based material.

Each of the positive electrode active material layer 16 and the negative electrode active material layer 17 (hereinafter also simply referred to as an "active material layer") may further contain a conductive aid, a binder, an electrolyte (polymer matrix, ion conductive polymer, electrolytic solution, or another electrolyte) for enhancing electric conductivity, a supporting electrolyte salt (lithium salt) for enhancing ion conductivity, and other components as necessary. The conductive aid is added to enhance the conductivity of each electrode (the bipolar electrodes 11, the positive electrode terminal electrode 12, and the negative electrode terminal electrode 13). The conductive aid is, for example, acetylene black, carbon black, graphite, or another material.

Examples of the binder include fluorine-containing resins such as polyvinylidene fluoride, polytetrafluoroethylene, and fluororubber, thermoplastic resins such as polypropylene and polyethylene, imide resins such as polyimide and polyamideimide, alkoxysilyl group-containing resins, acrylic resins such as acrylic acid and methacrylic acid, alginates such as styrene-butadiene rubber (SBR), carboxymethyl cellulose, sodium alginate, and ammonium alginate, water-soluble cellulose ester crosslinked bodies, and starch-acrylic acid graft polymers. These binders can be used alone or in combination. For example, water, N-methyl-2 pyrrolidone (NMP), or the like is used as a solvent.

The separators 14 may each be, for example, a porous sheet or a nonwoven fabric containing a polymer that absorbs and holds an electrolyte. Examples of a material of the separators 14 include polypropylene, polyethylene, polyolefin, and polyester. The separators 14 may each have a single layer structure or a multilayer structure. The multilayer structure may include, for example, a ceramic layer or another layer as an adhesive layer or a heat resistant layer. The separators 14 may be impregnated with an electrolyte. The separators 14 may include an electrolyte such as a polymer electrolyte or an inorganic electrolyte. Examples of the electrolyte with which the separator 14 is impregnated include a liquid electrolyte (electrolytic solution) containing a nonaqueous solvent and an electrolyte salt dissolved in the nonaqueous solvent, or a polymer gel electrolyte containing an electrolyte held in a polymer matrix.

When the separators 14 are impregnated with an electrolytic solution, a known lithium salt such as LiClO₄, LiAsF₆, LiPF₆, LiBF₄, LiCF₃SO₃, LiN(FSO₂)₂, or LiN(CF₃SO₂)₂ may be used as an electrolyte salt. In addition, a known solvent such as a cyclic carbonate, a cyclic ester, a chain carbonate, a chain ester, or an ether may be used as the nonaqueous solvent. Note that two or more of these known solvent materials may be used in combination.

The electrode laminate 10 further includes a sealing body 20. The sealing body 20 is formed in a frame shape in a peripheral edge portion of the electrode laminate 10 in such a way as to form an outer edge of the electrode laminate 10 when viewed in the Z-axis direction. The sealing body 20 can be bonded to the first surface 15a and the second surface 15b of the current collectors 15 at peripheral edge portions 15c of the current collectors 15. The sealing body 20 forms internal spaces S between the current collectors 15 adjacent to each other in the Z-axis direction, and seals each of the internal spaces S. An electrolytic solution (not illustrated) is contained in each internal space S. That is, the sealing body 20 defines the internal spaces S containing the electrolytic solution in cooperation with the current collectors 15 adjacent to each other in the Z-axis direction. The sealing body 20 blocks permeation of the electrolytic solution to the outside.

The sealing body 20 suppresses intrusion of moisture and the like from the outside of the electrode laminate 10 into the internal spaces S. The sealing body 20 prevents gas generated at each electrode due to, for example, charge and discharge reactions or the like from leaking to the outside of the power storage module 1. Edge portions of the separators 14 are bonded to the sealing body 20. The sealing body 20 contains an insulating material. Examples of a material of the sealing body 20 include various resin materials such as polypropylene, polyethylene, polystyrene, ABS resin, acid-modified polypropylene, acid-modified polyethylene, and acrylonitrile styrene resin.

An example of the sealing body 20 includes a plurality of sealing materials 21, a pair of end sealing materials 24, and a plurality of spacers 22. The sealing materials 21, the end sealing materials 24, and the spacers 22 may be frame-shaped members formed in sheet shapes. In addition, a welded end 23 is formed in the sealing body 20. The plurality of sealing materials 21 is provided in the second region R2 of the current collectors 15 constituting the plurality of bipolar electrodes 11. The sealing materials 21 have a frame shape when viewed in the Z-axis direction. The sealing materials 21 are provided along the peripheral edge portions 15c of the current collectors 15. The peripheral edge portions 15c are outer peripheral portions of the second region R2. The sealing materials 21 are provided in such a way as to reach the second surfaces 15b from the first surfaces 15a of the current collectors 15 through end surfaces, and cover the peripheral edge portions 15c. The sealing materials 21 can be welded to at least the first surfaces 15a or the second surfaces 15b of the current collectors 15.

The end sealing material 24 is provided in the second region R2 of the current collector 15 constituting the positive electrode terminal electrode 12 and the negative electrode terminal electrode 13. The end sealing materials 24, therefore, are disposed in such a way as to sandwich the plurality of sealing materials 21 in the Z-axis direction. The end sealing materials 24 have frame shapes when viewed in the Z-axis direction. As with the sealing materials 21, the end sealing materials 24 are provided along the peripheral edge portions 15c of the current collectors 15. For example, when viewed in the Z direction, width of the sealing materials 21 in a region along the outer side surface 20sA is greater than width of the sealing materials 21 in regions along the outer side surfaces 20sB, 20sC, and 20sD. In addition, when viewed in the Z-axis direction, width of the end sealing materials 24 is greater than that of the sealing materials 21. That is, inner edges of the end sealing materials 24 are located inside inner edges of the sealing materials 21. Note that the width of the sealing materials 21 in the regions along the outer side surfaces 20sA and 20sB may be distances of the sealing materials 21 in the regions in the Y-axis direction (second direction). In addition, the width of the sealing materials 21 in the regions along the outer side surfaces 20sC and 20sD may be distances of the sealing materials 21 in the regions in an X-axis direction (third direction).

The spacers 22 have frame shapes when viewed in the Z-axis direction. The spacers 22 are disposed along the peripheral edge portions 15c of the current collectors 15. The spacers 22 are disposed in such a way as to be interposed between the sealing materials 21 adjacent to each other in the Z-axis direction. The spacers 22 can be welded to at least one of the sealing materials 21 adjacent to each other in the Z-axis direction. In addition, the spacers 22 are disposed in such a way as to be interposed between the sealing materials 21 and the end sealing materials 24 adjacent to each other in the Z-axis direction. The spacers 22 can be welded to at least the sealing materials 21 and the end sealing materials 24 adjacent to each other in the Z-axis direction. The spacers 22 can hold spaces between the current collectors 15 adjacent to each other in the Z-axis direction. That is, the spacers 22, the sealing materials 21, and the end sealing materials 24 define the internal spaces S between the adjacent current collectors 15.

When viewed in the Z-axis direction, width of the spacers 22 in the region along the outer side surface 20sA is greater than that of the spacers 22 in the regions along the outer side surfaces 20sB, 20sC, and 20sD. In addition, in the regions along the outer side surfaces 20sB, 20sC, and 20sD, the width of the spacers 22 is smaller than that of the sealing materials 21. That is, in the regions along the outer side surfaces 20sB, 20sC, and 20sD, inner edges of the spacers 22 are located outside the inner edges of the sealing materials 21. In the region along the outer side surface 20sA, on the other hand, the width of the spacers 22 is greater than that of the sealing materials 21. That is, in the region along the outer side surface 20sA, the inner edges of the spacers 22 are located inside the inner edges of the sealing materials 21. Note that the inner edges of the spacers 22 are located outside the inner edges of the end sealing materials 24 in any region.

The welded end 23 is formed by welding and integrating ends of the plurality of sealing materials 21, the pair of end sealing materials 24, and the plurality of spacers 22 on a side opposite the internal spaces S. The welded end 23 surrounds the current collectors 15 when viewed in the Z-axis direction, and has a frame shape in such a way as to form an outer periphery of the electrode laminate 10. A surface of the welded end 23 on the surface side opposite the internal spaces S extends in the Z-axis direction and constitutes the outer side surface 20s of the sealing body 20. In other words, the sealing body 20 includes the outer side surface 20s opposite the internal spaces S. The outer side surface 20s may be formed as a flat surface.

The sealing body 20 has a plurality of communication holes 27 communicating with the plurality of internal spaces S (see FIG. 5). As an example, the communication holes 27 are cutout portions formed in the spacers 22. The communication holes 27 penetrate the welded end 23. The communication holes 27 each have an opening in the corresponding internal space S and another opening in the outer side surface 20s of the sealing body 20. In the illustrated example, an opening is formed in the outer side surface 20sA.

The injected resin portion 50 is a reinforcing member that reinforces the outer side surface 20sA in which the communication holes 27 are formed. The injected resin portion 50 is molded in a predetermined shape to provide injection ports communicating with the communication holes 27. The injected resin portion 50 is bonded to the sealing body 20. For example, the injected resin portion 50 is integrally bonded to the sealing body 20 through injection molding. An example of the injected resin portion 50 includes a main body portion 51, a first overhang portion 55, a second overhang portion 57, and first thin portions 59.

The main body portion 51 partially covers the outer side surface 20sA. For example, the main body portion 51 covers the outer side surface 20sA in such a way as to include a region (main body region) R3 in which the plurality of communication holes 27 formed in the outer side surface 20sA is formed. As described above, the plurality of communication holes 27 communicates with the plurality of internal spaces S, respectively. In the example illustrated in FIG. 3, 30 communication holes 27 corresponding to 30 internal spaces formed between the current collectors 15 are discretely arranged in the X-axis direction and the Z-axis direction. More specifically, communication holes 27 corresponding to internal spaces of first to tenth layers from a positive electrode terminal electrode 12 side are discretely arranged at equal intervals in the X-axis direction, and communication holes 27 corresponding to internal spaces of eleventh to twentieth layers and communication holes 27 corresponding to internal spaces of twenty-first to thirtieth layers are arranged in order in the Z-axis direction below the internal spaces of the first to tenth layers. The main body portion 51 extends in a rectangular shape along the X-axis direction and the Z-axis direction to cover the main body region R3 where the 30 communication holes 27 are formed.

The main body portion 51 is formed in a rectangular plate shape having a predetermined thickness in the Y-axis direction. For example, a thickness L2 of the main body portion 51 in the Y-axis direction may be 2.0 ± 0.5 mm. The main body portion 51 has openings 52 at positions corresponding to the communication holes 27. The thickness L2 of the main body portion 51 corresponds to depth, in the Y-axis direction, of the openings 52 provided in the main body portion 51. In addition, the main body portion 51 includes frame-shaped protruding frame portions 53 that protrude outward in the Y-axis direction. The protruding frame portions 53 surround the corresponding openings 52 when viewed in the Y-axis direction (see FIG. 3), and function as partition walls separating the openings 52 from one another. In the illustrated example, 10 protruding frame portions 53 in which three spaces for separating three vertically arranged openings 52 from one another are formed are arranged in the X-axis direction. For example, thickness of the protruding frame portions 53 in the Y-axis direction may be about 0.5 mm to 6.0 mm.

In an example, each protruding frame portions 53 is used when an electrolyte solution is injected into the corresponding internal space S. When the electrolyte solution is injected, for example, a nozzle of a solution injection device is brought into close contact with a top surface of the protruding frame portion 53, and the electrolyte solution is introduced into the space of the protruding frame portion 53 from the nozzle. The electrolyte solution can thus be injected into the internal spaces S through the openings 52 and the communication holes 27.

After the electrolyte solution is injected, a laminate sheet 54 for sealing the protruding frame portions 53 is provided for the protruding frame portions 53 (see FIG. 5). The laminate sheet 54 may be, for example, a sheet obtained by covering a metal layer composed of aluminum or the like with a resin layer. The laminate sheet 54 may be fused to, for example, the top surfaces of the protruding frame portions 53.

As illustrated in FIG. 4, both end surfaces of the electrode laminate 10 in the Z-axis direction are a first end surface 10a and a second end surface 10b. The first end surface 10a is an outermost surface of the electrode laminate 10 on a positive side of the Z-axis direction. That is, the first end surface 10a includes an exposed surface of the second surface 15b of the positive electrode terminal electrode 12 and an exposed surface of the end sealing material 24 bonded to a peripheral edge of the positive electrode terminal electrode 12. The second end surface 10b is an outermost surface of the electrode laminate 10 on a negative side of the Z-axis direction. That is, the second end surface 10b includes an exposed surface of the first surface 15a of the negative electrode terminal electrode 13 and an exposed surface of the end sealing material 24 bonded to a peripheral edge of the negative electrode terminal electrode 13. The first overhang portion 55 is formed in such a way as to be connected to a first end edge 51a of the main body portion 51 in the Z-axis direction. The first overhang portion 55 partially covers the first end surface 10a of the electrode laminate 10. For example, the first overhang portion 55 partially covers the end sealing material 24 bonded to the positive electrode terminal electrode 12 constituting the first end surface 10a. In the illustrated example, an end edge 55a of the first overhang portion 55 extends to a position inside outer edges 14a of the separators 14 and outside inner edges 22a of the spacers 22 when viewed in the Z-axis direction. The first overhang portion 55 may be formed in a rectangular plate shape having the same length as the main body portion 51 in the X-axis direction. For example, thickness of the first overhang portion 55 in the Z-axis direction may be 1.5 ± 0.5 mm or may be thinner.

The second overhang portion 57 is connected to a second end edge 51b of the main body portion 51 on a side opposite the first end edge 51a to partially cover the second end surface 10b of the electrode laminate 10. For example, the second overhang portion 57 partially covers the end sealing material 24 bonded to the negative electrode terminal electrode 13 constituting the second end surface 10b. In the illustrated example, an end edge 57a of the second overhang portion 57 extends to a position inside the outer edges 14a of the separators 14 and outside the inner edges 22a of the spacers 22 when viewed in the Z-axis direction. The second overhang portion 57 may be formed in a rectangular plate shape having the same length as the main body portion 51 in the X-axis direction. For example, thickness of the second overhang portion 57 in the Z-axis direction may be 1.5 ± 0.5 mm, and may be different from the thickness of the first overhang portion 55.

The first thin portions 59 are formed in such a way as to be connected to a third end edge 51c and a fourth end edge 51d, which are two end edges of the main body portion 51 in the X-axis direction (see FIG. 3). The first thin portions 59 extend from the main body portion 51 along the outer side surface 20sA and are bonded to the outer side surface 20sA. Size of the first thin portions 59 in the Z-axis direction may be equal to that of the main body portion 51 in the Z-axis direction. A thickness L1 (see FIG. 6) of the first thin portions 59 in the Y-axis direction is smaller than the thickness L2 (see FIG. 4) of the main body portion 51 in the Y-axis direction. The thickness L1 of the first thin portions 59 may be 1/3 or less of the thickness L2 of the main body portion 51, instead. For example, the thickness of the first thin portions 59 in the Y-axis direction may be 0.5 mm or less. Note that, in the example of FIG. 3, the first thin portions 59 have rectangular shapes when viewed in the Y-axis direction, but the first thin portions 59 only need to have regions bonded to the outer side surface 20sA, and the shapes of the first thin portions 59 are not limited to rectangular shapes.

In the portions of the first surface 15a of the current collector 15 of the positive electrode terminal electrode 12 and the second surface 15b of the current collector 15 of the negative electrode terminal electrode 13 exposed from the sealing body 20, conductive members that function as terminals for extracting currents from the power storage module 1 may be disposed and electrically connected. The conductive members can be used to electrically connect a plurality of power storage modules 1 to one another. In addition, the conductive members can also be used as restraining members in order to apply restraining loads to the electrode laminate 10. Furthermore, cooling channels may be formed in the conductive members. The electrode laminate 10 can be cooled by circulating a cooling medium through the cooling channels formed in the conductive members.

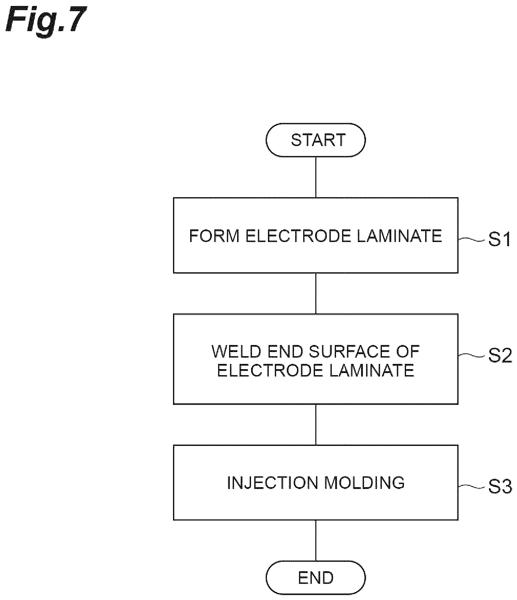

Next, a method for manufacturing the power storage module will be described. FIG. 7 is a flowchart illustrating an example of a method for manufacturing the power storage module. In an example of the manufacturing method, first, an electrode laminate 10 including a plurality of electrodes stacked in the Z-axis direction is formed (step S1). The electrode laminate 10 is thus prepared. Note that, in step S1, the sealing body 20 of the formed electrode laminate 10 does not include the welded end 23. That is, the end sealing materials 24, the sealing materials 21, and the spacers 22 stacked in the Z-axis direction are not welded to each other.

In addition, the spacers 22 may have include cutout portions connected from the internal spaces S to the outer edge at positions corresponding to the communication holes 27. In step S1, the electrode laminate 10 is formed in a state where inserts are disposed in the cutout portions formed in the spacers 22. The electrode laminate 10 formed in this manner includes a plurality of inserts protruding from a side surface corresponding to the outer side surface 20sA. The inserts are inserted into the cutout portions to prevent the cutout portions from being blocked in subsequent steps. By removing the inserts after the injection molding, the communication holes 27 and the openings 52 are formed in portions where the inserts are disposed. The inserts may be, for example, metal plates.

Subsequently, the welded end 23 is formed on the electrode laminate 10 (step S2). As a result, the internal spaces S are formed between adjacent current collectors 15. In the step of forming the welded end 23, outer edge portions of the sealing materials 21, the end sealing materials 24, and the spacers 22, which constitute the electrode laminate 10, on a side opposite the internal spaces S are welded to each other. Note that the welded end 23 is formed in a state where the inserts are disposed in the cutout portions of the spacers 22. In an example, thickness of the welded end 23 corresponding to the other outer side surfaces 20sB, 20sC, and 20sD may be greater than that of the welded end 23 corresponding to the outer side surface 20sA.

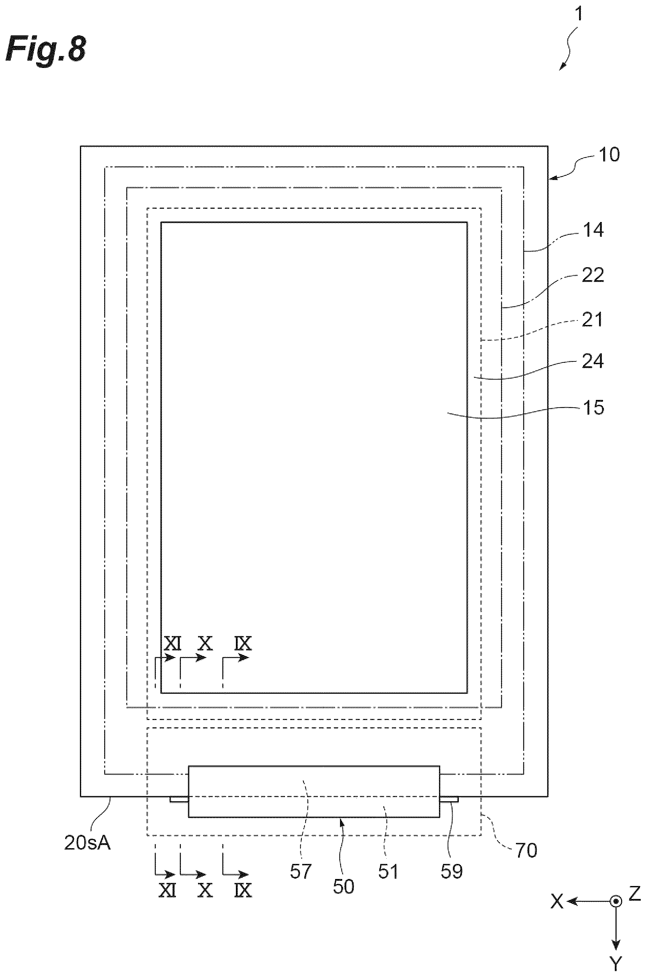

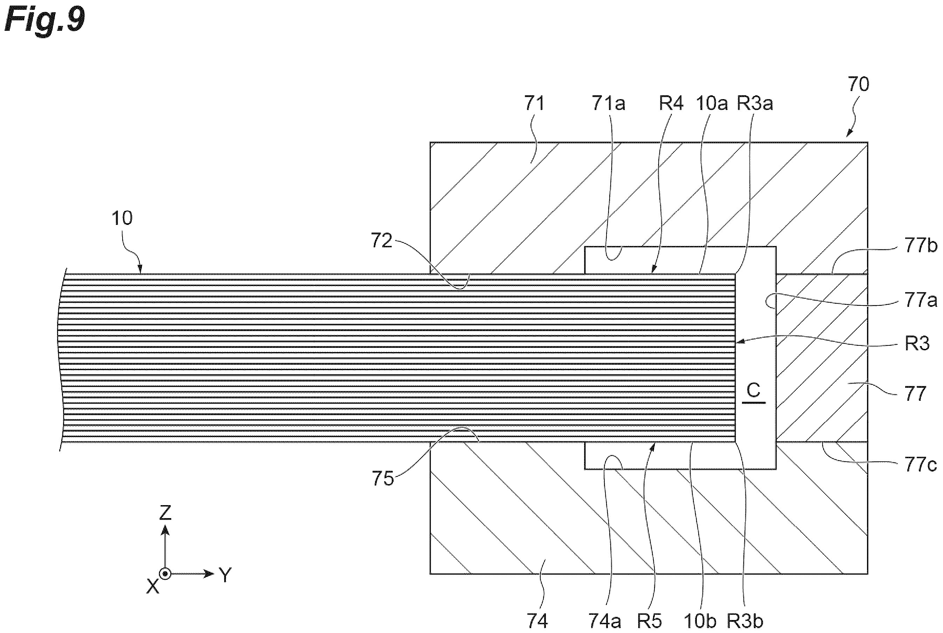

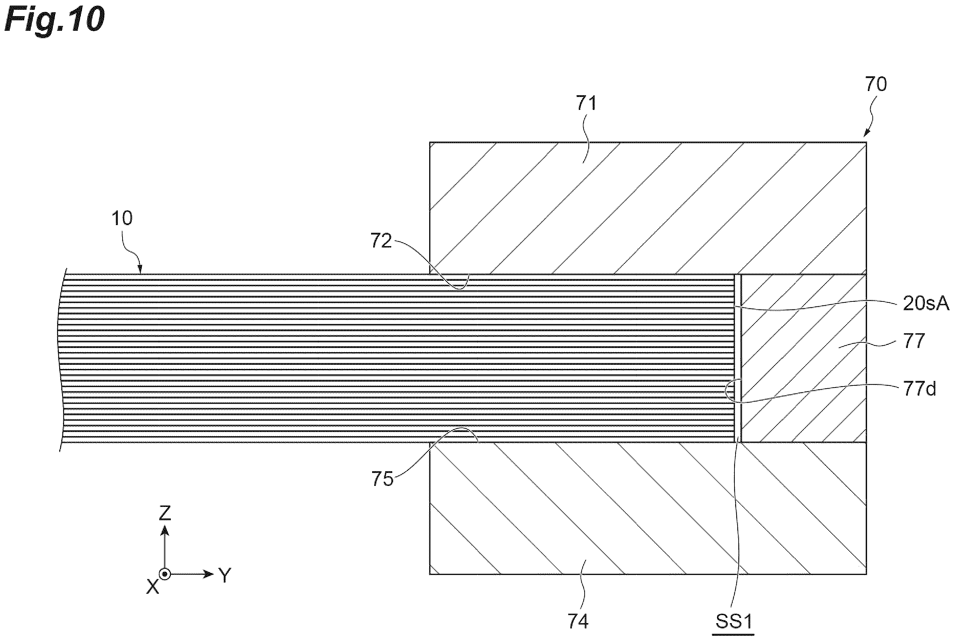

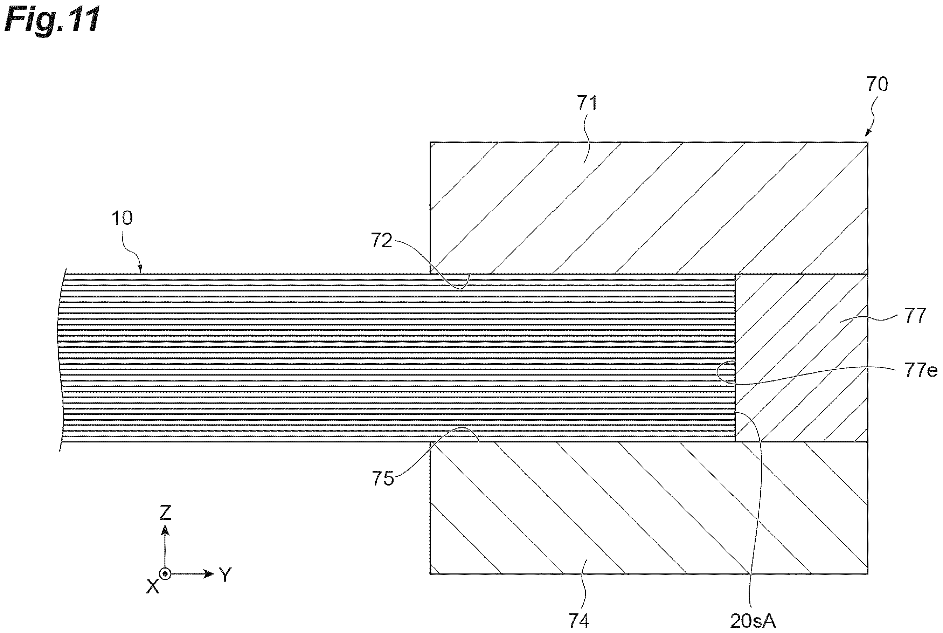

Subsequently, the injected resin portion 50 is formed on the sealing body 20 of the electrode laminate 10 (step S3). The step of forming the injected resin portion 50 includes a step of attaching a mold partially covering the outer side surface 20sA to the electrode laminate 10 and a step of injecting a resin into a molding space of the mold. FIG. 8 is a plan view illustrating a position of a mold 70 attached to the example of the power storage module. In FIG. 8, an attachment position of the mold 70 is indicated by a broken line. FIG. 9 is a cross-sectional view schematically illustrating the mold taken along line IX-IX in FIG. 8. FIG. 10 is a cross-sectional view schematically illustrating the mold taken along line X-X in FIG. 8. FIG. 11 is a cross-sectional view schematically illustrating the mold taken along line XI-XI in FIG. 8.

In step S3, the mold 70 is attached to the electrode laminate 10 placed on a placement table, so that a continuous molding space C is formed between the main body region R3, a first overhang region R4, and a second overhang region R5 of the electrode laminate 10 (see FIG. 9). Thickness of the molding space C in the Y-axis direction corresponds to the thickness L2 (see FIG. 4) of the main body portion 51. In addition, the thickness of the molding space C in the Z-axis direction may be controlled in such a way as to be constant. Accordingly, the power storage module 1 can be accurately and stably manufactured. When there is a tolerance in size of the electrode laminate 10, volume of the molding space C can vary depending on, for example, thickness, in the Z-axis direction, of the electrode laminate 10 disposed in the mold 70. In this case, the first overhang portion 55 and the second overhang portion 57 may be different from each other in terms of thickness.

The main body region R3 is a region including the plurality of communication holes 27 in the outer side surface 20sA. The main body region R3 is a bonding surface with the main body portion 51. The first overhang region R4 is connected to a first end edge R3a of the main body region R3 in the Z-axis direction. The first overhang region R4 is a region partially extending to the first end surface 10a intersecting the Z-axis direction in the electrode laminate 10. The first overhang region R4 is a bonding surface with the first overhang portion 55. The second overhang region R5 is connected to a second end edge R3b opposite the first end edge R3a in the main body region R3. The second overhang region R5 is a region partially extending to the second end surface 10b opposite the first end surface 10a in the electrode laminate 10. The second overhang region R5 is a bonding surface with the second overhang portion 57.

In addition, by attaching the mold 70 to the electrode laminate 10, a first thin space SS1 extending from the molding space C along the outer side surface 20sA is formed (see FIG. 10). Thickness of the first thin space SS1 in the Y-axis direction corresponds to the thickness L1 (see FIG. 4) of the first thin portions 59. Note that since the first thin space SS1 is a space formed in the mold 70 together with the molding space C, the first thin space SS1 can be regarded as a part of the molding space C, but in the present specification, the first thin space SS1 is defined as another space connected to the molding space C.

The mold 70 may include a first mold 71 and a second mold 74 that sandwich the electrode laminate 10 in the Z-axis direction. In addition, the mold 70 may include a third mold 77 disposed between the first mold 71 and the second mold 74. As illustrated in FIG. 9, the first mold 71 has a contact surface 72 in contact with the first end surface 10a of the electrode laminate 10 and an inner surface 71a facing the first overhang region R4. Similarly, the second mold 74 has a contact surface 75 in contact with the second end surface 10b of the electrode laminate 10 and an inner surface 74a facing the second overhang region R5.

In a range in the X-axis direction where the main body portion 51 is formed, the electrode laminate 10 is sandwiched between the contact surface 72 of the first mold 71 and the contact surface 75 of the second mold 74 such that the outer edge of the electrode laminate 10 is exposed in the molding space C. In an example, the contact surface 72 of the first mold 71 may contact the end sealing material 24 at a position where the spacer 22, the sealing material 21, and the separator 14 overlap when viewed in the Z-axis direction. Similarly, the contact surface 75 of the second mold 74 may contact the end sealing material 24 at a position where the spacer 22, the sealing material 21, and the separator 14 overlap. Note that the current collector 15 may extend at the position where the spacer 22, the sealing material 21, and the separator 14 overlap.

The third mold 77 is disposed between the first mold 71 and the second mold 74 in the Z-axis direction, and forms the molding space C together with the first mold 71 and the second mold 74. The third mold 77 has a contact surface 77b in contact with the first mold 71, a contact surface 77c in contact with the second mold 74, and an inner surface 77a facing the main body region R3. In the range in the X-axis direction where the main body portion 51 is formed, the inner surface 77a of the third mold 77 is separated from the main body region R3 of the outer side surface 20sA by a distance corresponding to the thickness L2 (see FIG. 4) of the main body portion 51.

Note that, in an example of step S3, first, the second mold 74 is disposed in such a way as to be in contact with the electrode laminate 10. In this case, the electrode laminate 10 may be placed on the placement table such that an end including the outer side surface 20sA protrudes from the placement table. Subsequently, the first mold 71 presses the electrode laminate 10 in the Z-axis direction, and the electrode laminate 10 is sandwiched between the first mold 71 and the second mold 74. Thereafter, the third mold 77 is disposed. Note that the mold 70 only needs to partially cover the outer side surface 20sA of the electrode laminate 10. In an example, both end edges of the outer side surface 20sA in the X-axis direction may be exposed to the outside of the mold 70.

As illustrated in FIG. 10, in ranges in the X-axis direction that are outside the region where the main body portion 51 is formed and where the first thin portions 59 are formed, the contact surface 72 of the first mold 71 and the contact surface 75 of the second mold 74 extend to positions of the outer side surface 20sA, which is a part of the outer periphery of the electrode laminate 10. In addition, the third mold 77 has an inner surface 77d closer to the outer side surface 20sA of the electrode laminate 10 than the inner surface 77a is. The inner surface 77d faces first thin regions R6 in which the first thin portions 59 are bonded to the outer side surface 20sA. A distance from the inner surface 77d to the outer side surface 20sA corresponds to the thickness L1 (see FIG. 6) of the first thin portions 59.

As illustrated in FIG. 11, at ends in the X-axis direction, the contact surfaces of the first mold 71 and the second mold 74 extend to positions of the outer side surface 20sA of the electrode laminate 10 as in the ranges where the first thin portions 59 are formed. The third mold 77 has a contact surface 77e in contact with the outer side surface 20sA. In a state where the mold 70 is attached to the electrode laminate 10, the contact surface 77e of the third mold 77 may be pressed against the outer side surface 20sA of the electrode laminate 10.

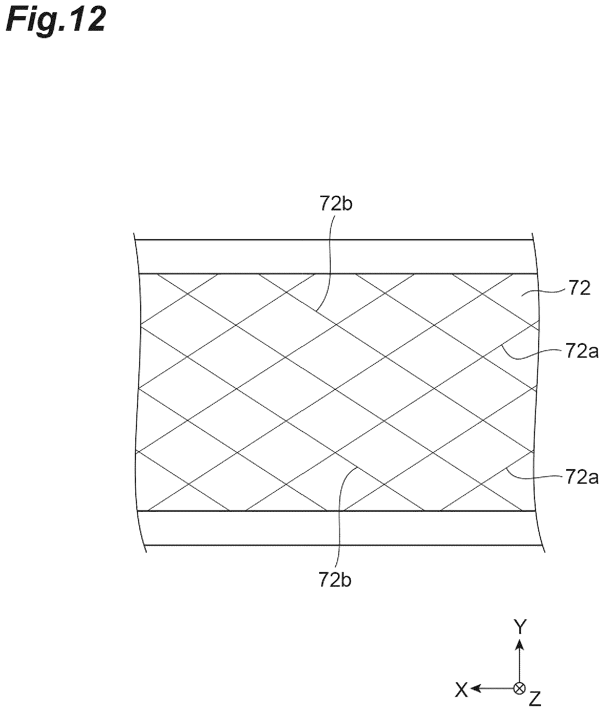

FIG. 12 is a diagram schematically illustrating a contact surface of a mold with respect to an electrode laminate. The contact surface 72 of the first mold 71 and the contact surface 75 of the second mold 74 have the same shape. FIG. 12 representatively illustrates the contact surface 72 of the first mold 71. As illustrated in FIG. 12, grooves are formed in the contact surface 72 of the first mold 71. The grooves in the illustrated example form a mesh pattern when viewed in the Z-axis direction. That is, the grooves are formed such that a plurality of first straight lines 72a inclined at a first angle and a plurality of second straight lines 72b inclined at a second angle intersect each other when viewed in the Z-axis direction. Both the first straight lines 72a and the second straight lines 72b intersect both the X-axis direction and the Y-axis direction. By having the above shape, surface roughness of the contact surfaces of the first mold 71 and the second mold 74 is greater than that of the surfaces of the mold 70 forming the molding space C (that is, the inner surfaces). Note that both ends of the contact surface 72 in the Y-axis direction may be subjected to R processing.

After the mold 70 is attached to the electrode laminate 10 in step S3, a resin is injected into the molding space C of the mold 70 to mold the injected resin portion 50 (step S4). In step S4, the molding space C can be filled with the resin, and the first thin space SS1 can be filled with the resin leaking from the molding space C. It is not always necessary in step S4 that the first thin space SS1 is completely filled with the resin, and it is sufficient that a part of the first thin space SS1 is filled with the resin. That is, the first thin portions 59 formed in step S4 need not have rectangular shapes corresponding to the first thin space SS1 when viewed in the Y-axis direction, and may have chips at ends or peripheral edges.

FIGS. 9 to 11 schematically illustrate the mold 70, but the mold 70 may be provided with recesses or the like corresponding to the protruding frame portions 53. In addition, for example, a holding portion that holds the inserts protruding from the electrode laminate 10 may be formed in the mold 70. After the injected resin portion 50 is formed in step S4, the inserts are pulled out to form the openings 52 connected to the communication holes 27 in the injected resin portion 50 bonded to the electrode laminate 10.

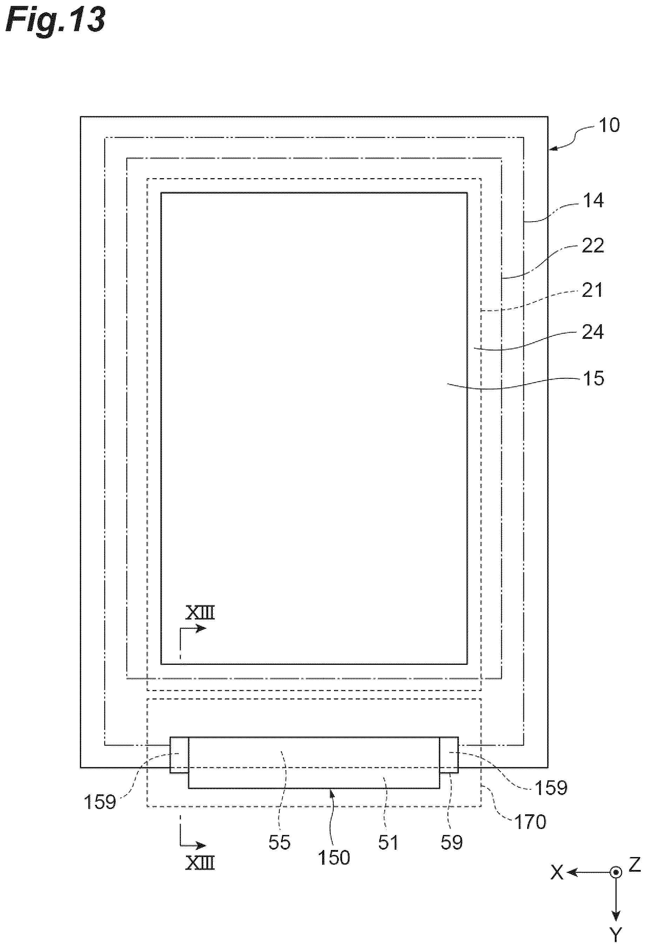

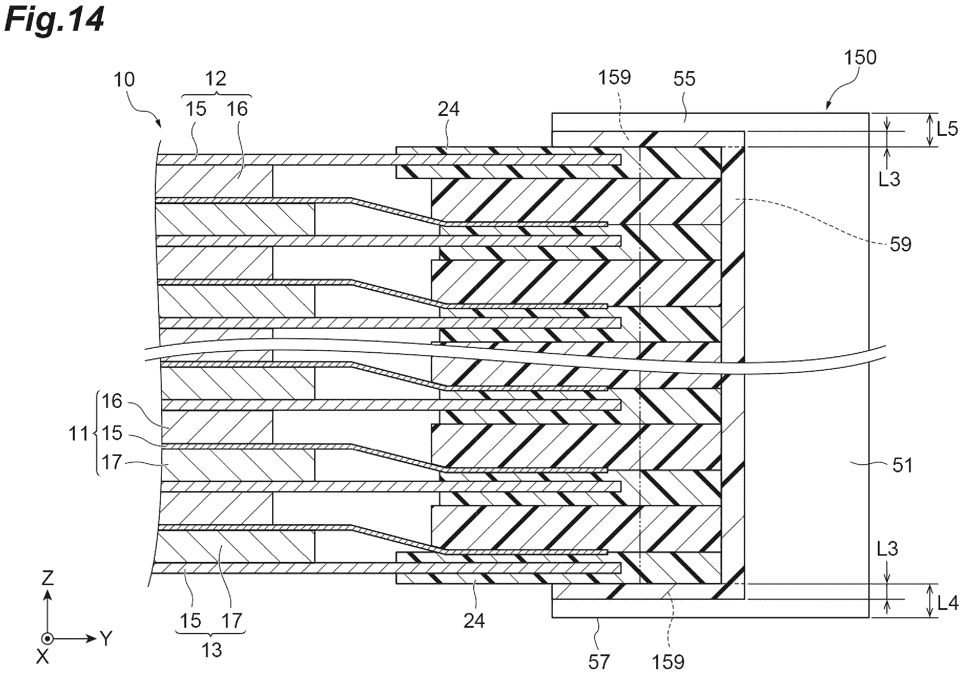

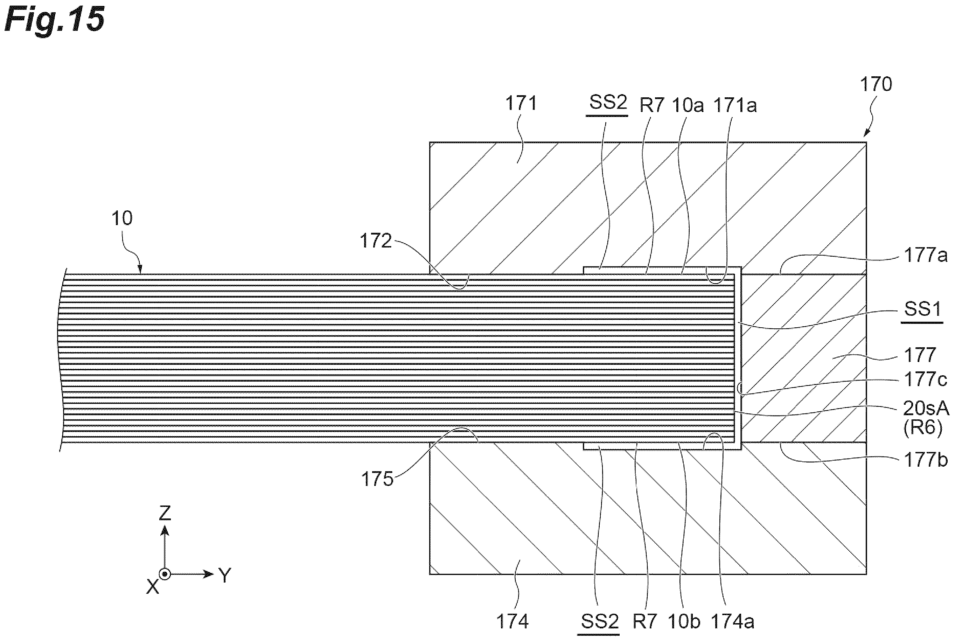

FIG. 13 is a schematic plan view of another example of the power storage module. FIG. 14 is a schematic cross-sectional view of the power storage module illustrated in FIG. 13. FIG. 15 is a schematic cross-sectional view of a mold illustrated in FIG. 13. In the example illustrated in FIGS. 13 to 15, the power storage module includes an injected resin portion 150 having a shape different from that of the injected resin portion 50. The injected resin portion 150 includes a main body portion 51, a first overhang portion 55, a second overhang portion 57, first thin portions 59, and second thin portions 159. Configuration of the main body portion 51, the first overhang portion 55, the second overhang portion 57, and the first thin portions 59 is the same as in the injected resin portion 50, and description thereof is omitted.

The second thin portions 159 are formed in such a way as to be connected to both end edges of the first overhang portion 55 and the second overhang portion 57 in the X-axis direction. In addition, the second thin portions 159 may be connected to the first thin portions 59. The second thin portions 159 extend from the first overhang portion 55 and the second overhang portion 57 along the end sealing materials 24. A thickness L3 of the second thin portion 159 in the Z-axis direction is smaller than thicknesses L4 and L5 of the first overhang portion 55 and the second overhang portion 57 in the Z-axis direction. For example, the thickness L3 may be smaller than or equal to 1/3 of the thickness L4 or L5. In addition, the second thin portions 159 and the first thin portions 59 may have the same thickness, and a relationship between the thickness L3 of the second thin portions 159 and the thicknesses L4 and L5 of the first overhang portion 55 and the second overhang portion 57 may be the same as a relationship between the thickness L1 of the first thin portions 59 and the thickness L2 of the main body portion 51. Note that, in the illustrated example, the second thin portion 159 has a rectangular shape when viewed in the Z-axis direction, but the shape of the second thin portion 159 is not limited to a rectangular shape.

As illustrated in FIG. 15, which is a cross-sectional view of a mold 170 at a position corresponding to the second thin portions 159, the first thin space SS1 and a second thin space SS2 for forming the first thin portions 59 and the second thin portions 159 are formed by a first mold 171, a second mold 174, and a third mold 177 constituting the mold 170. That is, in a range in the X-axis direction where the second thin portion 159 is formed, the first mold 171 has a contact surface 172 in contact with the first end surface 10a (end sealing material 24) of the electrode laminate 10, and an inner surface 171a that faces a second thin region R7, which is a region where the second thin portion 159 is bonded to the first end surface 10a.

Similarly, in a range in the X-axis direction where the second thin portion 159 is formed, the second mold 174 has a contact surface 175 in contact with the second end surface 10b (end sealing material 24) of the electrode laminate 10, and an inner surface 174a that faces a second thin region R7, which is a region where the second thin portion 159 is bonded to the second end surface 10b. The inner surface 171a of the first mold 171 and the inner surface 174a of the second mold 174 are separated from the electrode laminate 10 by a distance corresponding to the second thin portions 159. In addition, the third mold 177 has a contact surface 177a in contact with the first mold 171, a contact surface 177b in contact with the second mold 174, and an inner surface 177c facing the outer side surface 20sA. In a range in the X-axis direction where the second thin portions 159 are formed, the inner surface 177c of the third mold 177 is separated from the outer side surface 20sA by a distance corresponding to the first thin portions 59.

When a resin is injected into the mold 170 in a state where the mold 170 is attached to the electrode laminate 10, the resin in the molding space C of the mold 170 flows into the first thin space SS1 and the second thin space SS2. As a result, the first thin portions 59 and the second thin portions 159 are formed.

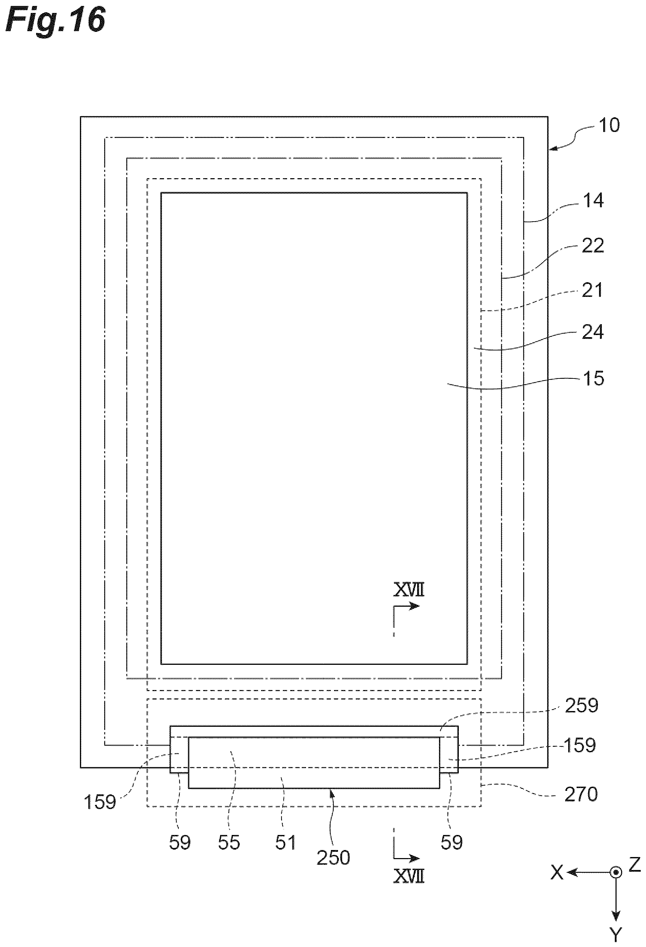

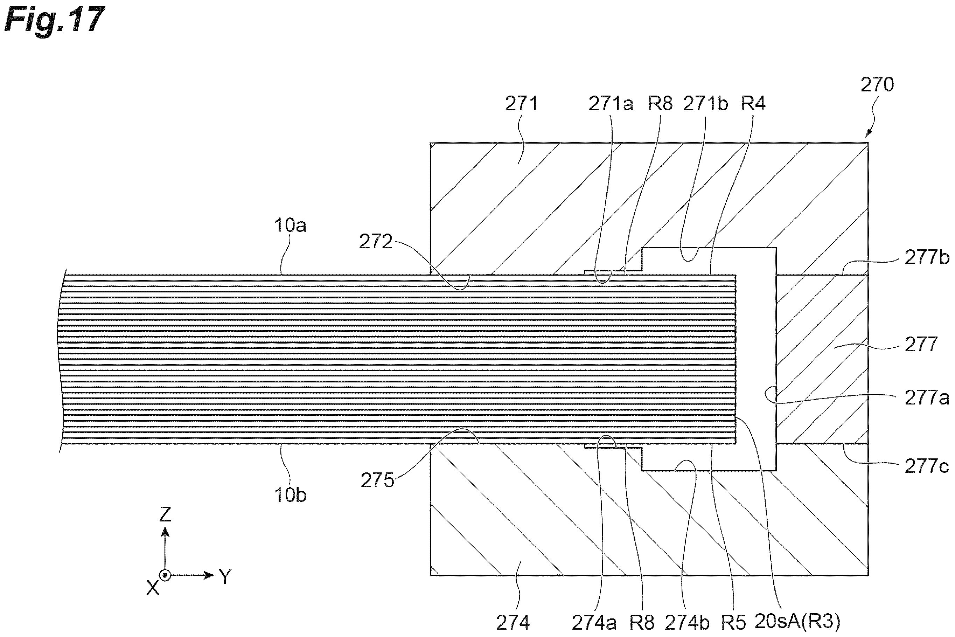

FIG. 16 is a schematic plan view of yet another example of a power storage module. FIG. 17 is a schematic cross-sectional view of a mold illustrated in FIG. 16. In the example of FIGS. 16 and 17, the power storage module includes an injected resin portion 250 having a shape different from that of the injected resin portion 150. The injected resin portion 250 includes a main body portion 51, a first overhang portion 55, a second overhang portion 57, first thin portions 59, second thin portions 159, and a third thin portion 259. Configuration of the main body portion 51, the first overhang portion 55, the second overhang portion 57, the first thin portions 59, and the second thin portions 159 is the same as in the injected resin portion 150, and description thereof is omitted.

The third thin portion 259 is formed in such a way as to be connected to the end edges of the first overhang portion 55 and the second overhang portion 57 in the Y-axis direction. In addition, the third thin portion 259 may be connected to the second thin portions 159. The third thin portion 259 extends from the first overhang portion 55 and the second overhang portion 57 along the end sealing materials 24. Thickness of the third thin portion 259 in the Z-axis direction may be smaller than that of the first overhang portion 55 and the second overhang portion 57 in the Z-axis direction, and, for example, may be the same as that of the second thin portions 159. Note that, in the illustrated example, the third thin portion 259 has a rectangular shape when viewed in the Z-axis direction, but the shape of the third thin portion 259 is not limited to a rectangular shape.

As illustrated in FIG. 17, which is a cross-sectional view of a mold 270 at a position corresponding to the third thin portion 259, a first mold 271 has, in a range in the X-axis direction where the third thin portion 259 is formed, a contact surface 272 in contact with the first end surface 10a (end sealing material 24) of the electrode laminate 10, an inner surface 271a facing a third thin region R8, which is a region where the third thin portion 259 is bonded to the first end surface 10a, and an inner surface 271b facing the first overhang region R4.

Similarly, in the range in the X-axis direction in which the third thin portion 259 is formed, a second mold 274 has a contact surface 275 in contact with the second end surface 10b (end sealing material 24) of the electrode laminate 10, an inner surface 274a facing a third thin region R8, which is a region where the third thin portion 259 is bonded to the first end surface 10a, and an inner surface 274b facing the second overhang region R5. The inner surface 271a of the first mold 271 and the inner surface 274a of the second mold 274 are separated from the electrode laminate 10 (end sealing materials 24) by a distance corresponding to the third thin portion 259. In addition, the third mold 277 has a contact surface 277b in contact with the first mold 271, a contact surface 277c in contact with the second mold 274, and an inner surface 277a facing the main body region R3.

When a resin is injected into the mold 270 in a state where the mold 270 is attached to the electrode laminate 10, the resin in the molding space C of the mold 270 flows into a first thin space SS1, a second thin space SS2, and a third thin space SS3. As a result, the first thin portions 59, the second thin portions 159, and the third thin portion 259 are formed.

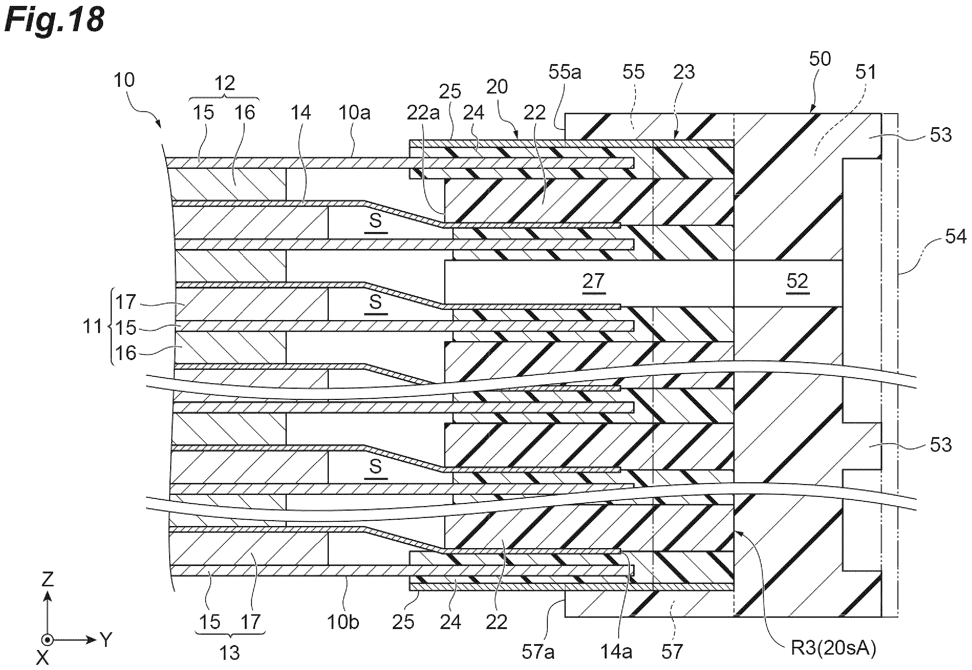

FIG. 18 is a schematic cross-sectional view of yet another example of a power storage module. In the example of FIG. 18, the power storage module includes the injected resin portion 50 as in the example of FIG. 5, but the power storage module may include the injected resin portion 150 or the injected resin portion 250, instead. In this power storage module, laminate sheets 25 may be bonded to the end sealing materials 24 constituting the first end surface 10a and the second end surface 10b of the electrode laminate 10. For example, the laminate sheets 25 may be welded to the end sealing materials 24. Similarly to the laminate sheet 54, the laminate sheets 25 may each be a sheet obtained by covering a metal layer composed of aluminum or the like with a resin layer.

For example, the end sealing materials 24 may be covered with the laminate sheets 25. In the illustrated example, a surface of the end sealing material 24 bonded to the positive electrode terminal electrode 12 along the first end surface 10a and a surface of the end sealing material 24 bonded to the negative electrode terminal electrode 13 along the second end surface 10b are covered with the laminate sheets 25. When viewed in the Z-axis direction, shapes of the laminate sheets 25 match the shapes of the end sealing materials 24. The laminate sheets 25 may be bonded to the end sealing materials 24 at any stage before step S3 described above. By bonding the laminate sheets 25 to outer side surfaces of the end sealing materials 24, rigidity of the electrode laminate 10 is improved. As a result, in step S3, for example, the mold can be more stably attached to the electrode laminate 10.

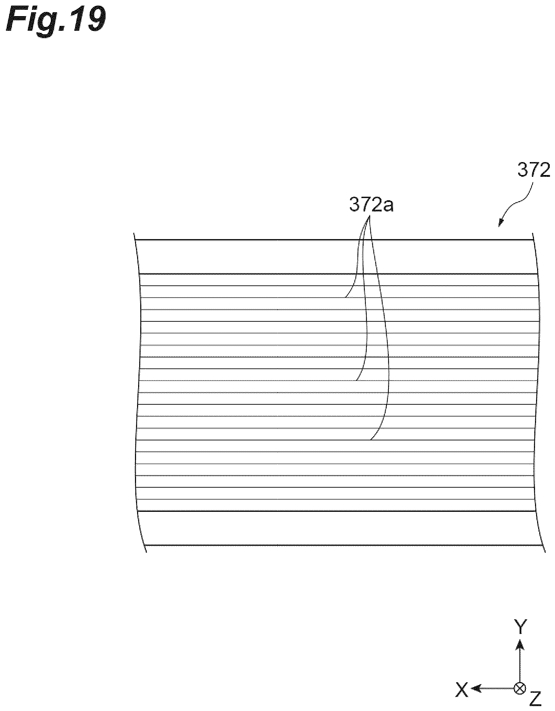

FIG. 19 is a diagram illustrating another example of the contact surface of the mold with respect to the electrode laminate. Grooves are formed in a contact surface 372 of the mold illustrated in FIG. 19. A plurality of grooves 372a extending in the X-axis direction when viewed in the Z-axis direction is formed in the contact surface 372 in the illustrated example. The grooves 372a are arranged at equal intervals in the Y-axis direction. By having the above shape, surface roughness of the contact surface 372 of the mold is greater than that of the inner surfaces of the molding space C in the mold.

As described above, an example of the power storage module 1 includes the electrode laminate 10 including the plurality of electrodes (the bipolar electrodes 11, the positive electrode terminal electrode 12, and the negative electrode terminal electrode 13) stacked in the first direction, the electrode laminate 10 including the sealing body 20 provided in such a way as to form the internal spaces S between the adjacent electrodes and seal the internal spaces S, and the injected resin portion 50 bonded to the sealing body 20. The plurality of electrodes includes the plurality of current collectors 15 having rectangular shapes when viewed in the Z-axis direction. The sealing body 20 includes the welded end 23 in which the outer peripheral edges of the plurality of frame-shaped members (the sealing materials 21 and the spacers 22) stacked in the Z-axis direction are welded to each other while being interposed between the plurality of current collectors 15. The sealing body 20 includes the first end surface 10a and the second end surface 10b, which are both end surfaces of the electrode laminate 10 in the Z-axis direction, the outer side surface 20sA, which is one of the four outer side surfaces 20s constituting a circumferential surface (a surface defining an outer edge when viewed in the Z-axis direction) of the welded end 23 and to which the injected resin portion 50 is bonded, and the plurality of communication holes 27 through which an outside of the outer side surface 20sA communicates with each of the plurality of internal spaces S. The injected resin portion 50 includes the main body portion 51 having the plurality of openings 52 connected to the plurality of communication holes 27, the main body portion 51 partially covering the outer side surface 20sA, the first overhang portion 55 connected to the main body portion 51 and partially covering the first end surface 10a, and the second overhang portion 57 connected to the main body portion 51 and partially covering the second end surface 10b. The main body portion 51 includes the plurality of protruding frame portions 53 protruding in the Y-axis direction intersecting the outer side surface 20sA. The plurality of protruding frame portions 53 surround the openings 52 connected to the plurality of communication holes 27 when viewed in the Y-axis direction.

In the power storage module 1, the communication holes 27 penetrating to the internal spaces S are provided at the welded end 23 of the sealing body 20 formed at the outer peripheral edge of the electrode laminate 10. The injected resin portion 50 including the protruding frame portions 53 surrounding the communication holes 27 is bonded to the sealing body 20. The injected resin portion 50 includes the main body portion 51 covering the outer side surface 20sA on which the welded end 23 is formed, the first overhang portion 55 extending from the main body portion 51 to the first end surface 10a of the electrode laminate 10, and the second overhang portion 57 extending from the main body portion 51 to the second end surface 10b of the electrode laminate 10. As described above, since the injected resin portion 50 is provided for only one of the four outer side surfaces, an increase in size of the power storage module 1 is suppressed. Such an injected resin portion 50 does not require a mold large enough to surround an entire periphery of the electrode laminate 10, and can be formed by a mold only large enough to partially cover the outer side surface 20sA of the electrode laminate 10. It is therefore possible to suppress an increase in size of the mold required for the manufacture. In addition, by providing the first overhang portion 55 and the second overhang portion 57, the injected resin portion 50 can be firmly bonded to the sealing body 20, and moisture permeation and gas permeation in the Z-axis direction between the internal spaces S and the outside are suppressed.

The outer side surfaces 20s of the electrode laminate 10 are formed by welding the sealing materials 21, the end sealing materials 24, and the spacers 22. The outer side surfaces 20s, therefore, are not necessarily flat surfaces, and might be constituted by end surfaces having unevenness. When the outer side surfaces 20s have unevenness, it is possible that bonding power between the outer side surfaces 20s and the injected resin portion 50 is deteriorated.

An example of the injected resin portion 50 may include the first thin portion 59 connected to the main body portion 51 and bonded to the outer side surface 20sA from the main body portion 51 along the outer side surface 20sA, and thickness of the first thin portion 59 in the Y-axis direction may be smaller than thickness of the main body portion 51 in the Y-axis direction. With this configuration, the injected resin portion 50 can be more firmly bonded to the sealing body 20 formed on the outer peripheral edge of the electrode laminate 10.

An example of the injected resin portion 150 may include the second thin portion 159 connected to the first overhang portion 55 and bonded to the first end surface 10a from the first overhang portion 55 along the first end surface 10a, and thickness of the second thin portion 159 in the Z-axis direction may be smaller than thickness of the first overhang portion 55 in the Z-axis direction. In addition, an example of the injected resin portion 250 may include the third thin portion 259 connected to the first overhang portion 55 and bonded to the first end surface 10a from the first overhang portion 55 along the first end surface 10a, and thickness of the third thin portion 259 in the Z-axis direction may be smaller than thickness of the first overhang portion 55 in the Z-axis direction. With this configuration, the injected resin portion 150 or 250 can be more firmly bonded to the sealing body 20 formed on the outer peripheral edge of the electrode laminate 10. Note that thickness of the second thin portion 159 and the third thin portion 259 may be the same or different from each other.

An example of the current collectors 15 includes the first region R1 provided at a center of the current collectors 15 when viewed from the Z-axis direction and provided with active material layers, and the frame-shaped second region R2 outside the first region R1. The electrode laminate 10 may include the plurality of frame-shaped sealing materials 21 provided in the second region R2 of the plurality of current collectors 15, and the plurality of spacers 22 interposed between the sealing materials 21 adjacent to each other in the Z-axis direction and defining, together with the plurality of sealing materials 21, the internal spaces S between the current collectors 15. With this configuration, the outer peripheral edges of the sealing materials 21 and the outer peripheral edges of the spacers 22 are welded to each other to form the welded end 23.

In addition, an example of the method for manufacturing the power storage module 1 includes the steps of preparing the electrode laminate 10 including the plurality of electrodes stacked in the Z-axis direction and having both end surfaces in the Z-axis direction as the first end surface 10a and the second end surface 10b (step S1), providing the welded end 23 on the electrode laminate 10 such that internal spaces S are formed between the adjacent electrodes (step S2), and forming the injected resin portion 50 at the welded end 23 (step S3). The step of providing the welded end 23 includes the step of welding the outer peripheral edges of the plurality of sealing materials 21, the plurality of spacers 22, and the end sealing materials 24 to one another. The step of forming the injected resin portion 50 includes the steps of attaching the mold 70 to the electrode laminate 10 in such a way as to form the continuous molding space C between, in the outer side surface 20sA, the main body region R3 including the plurality of communication holes 27, the first overhang region R4 connected to the main body region R3 and partially extending on the first end surface 10a, and the second overhang region R5 connected to the main body region R3 and partially extending on the second end surface 10b, and forming the injected resin portion 50 by injecting a resin into the molding space C attached to the electrode laminate 10.

In the method for manufacturing the power storage module 1, the injected resin portion 50 can be formed by the mold 70 only large enough to partially cover the outer side surface 20sA of the electrode laminate 10 without requiring a mold large enough to surround the entire periphery of the electrode laminate 10. It is therefore possible to suppress an increase in size of the mold required for the manufacture. In addition, it is possible to suppress an increase in size of the power storage module to be manufactured. In addition, when a shape of the injected resin portion 50 remains the same, a common mold can be used even in the case of an electrode laminate having larger electrodes.

In an example, in the step of attaching the mold 70, the first thin space SS1 connected to the molding space C and extending from the molding space C along the outer side surface 20sA may be formed, and thickness of the first thin space SS1 in the Y-axis direction is smaller than the thickness of the molding space C in the Y-axis direction. With this configuration, at a time of the injection molding, a resin can leak from the molding space C into the first thin space SS1 after the molding space C is filled with the resin. It is therefore possible to alleviate a pressure increase in the molding space C while sufficiently filling the molding space C with the resin.

In an example, in the step of attaching the mold, the second thin space SS2 connected to the molding space C and extending from the first overhang region R4 along the first end surface 10a may be formed, and thickness of the second thin space SS2 in the Z-axis direction may be smaller than thickness, in the Z-axis direction, of the molding space C in the first overhang region R4. With this configuration, at the time of the injection molding, the resin can leak from the molding space C into the second thin space SS2 after the molding space C is filled with the resin. It is therefore possible to alleviate a pressure increase in the molding space C while sufficiently filling the molding space C with the resin.

In an example, in the step of attaching the mold, the region of the electrode laminate 10 where the plurality of current collectors 15, the plurality of sealing materials 21, the plurality of spacers 22, and the plurality of separators 14 overlap when viewed in the Z-axis direction may be sandwiched by the mold 70. With this configuration, since a region of the electrode laminate 10 having a uniform thickness is sandwiched by the mold 70, the electrode laminate 10 can be stably sandwiched by the mold 70.

An example of the mold 70 may include the first mold 71 and the second mold 74 that sandwich the electrode laminate 10 in the Z-axis direction, and surface roughness of the contact surface 72 of the first mold 71 in contact with the electrode laminate 10 and the contact surface 75 of the second mold 74 in contact with the electrode laminate 10 may be greater than surface roughness of the surface of the mold 70 forming the molding space C. With this configuration, a friction coefficient between the first mold 71, the second mold 74, and the electrode laminate 10 can be increased. Even with a small mold clamping force, therefore, it is possible to suppress displacement of the electrode laminate 10 from the mold 70.

Examples of each embodiment of the present disclosure has been described above with reference to the drawings, but the present disclosure is not limited to the above embodiment.

Although an example in which the welded end 23 is formed on outer sides of the end edges of the current collectors 15 has been described, for example, the welded end 23 may be formed along the end edges of the current collectors 15 or may be formed on inner sides of the end edges of the current collectors 15, instead.

In addition, although the active material layers having rectangular shapes are exemplified, shapes of the active material layers are not particularly limited as long as the shapes can be regarded as rectangles. For example, the active material layers may be divided into a plurality of regions separated from one another, or may have shapes other than rectangles, instead. In this case, the shapes of the active material layers may each be regarded as a rectangle having long sides along long sides of the current collectors and having short sides along short sides of the current collectors among the smallest rectangles including all regions where the active material layers are formed.

In addition, although an example in which the first thin portions are formed at both ends of the main body portion 51 in the X-axis direction has been described, the first thin portion may be formed only at one end of the main body portion 51 in the X-axis direction. In addition, although an example in which the first thin portions are formed over entire regions of the Z-axis direction at the ends in the X-axis direction of the main body portion 51 has been described, the first thin portions may be formed only in parts in the X-axis direction. That is, size of the first thin portions in the Z-axis direction may be smaller than that of the main body portion in the Z-axis direction.

Although the spacers 22 having rectangular outer edges and rectangular inner edges are exemplified, planar shapes of the spacers 22 are not limited to this. For example, in a region along the outer side surface 20sA, width of the spacers 22 may be greater than that of the sealing materials 21 in a range in the X-axis direction where the mold is provided, and may be smaller than that of the sealing materials 21 in regions shifted, in the X-axis direction, from the range where the mold is provided. That is, in the region along the outer side surface 20sA, the inner edges of the spacers 22 may be located inside the inner edges of the sealing materials 21 in the range where the mold is provided, and may be located outside the inner edges of the sealing materials 21 in other regions.

In addition, although an example in which the thickness L2 of the main body portion 51 in the Y-axis direction is 2.0 ± 0.5 mm has been described above, the thickness L2 of the main body portion 51 may be greater or smaller, instead. In addition, although an example in which the thickness of the protruding frame portions 53 in the Y-axis direction is about 0.5 mm to 6.0 mm has been described, the thickness of the protruding frame portions 53 is not limited to this. In addition, although an example in which the thickness L1 of the first thin portions 59 is 1/3 or less of the thickness L2 of the main body portion 51 has been described, the thickness L1 of the first thin portions 59 is not limited to this, and may be, for example, about 1/2 of the thickness L2 of the main body portion 51, instead. Note that although 0.5 mm has been exemplified as a specific example of the thickness L1 of the first thin portions 59, the thickness L1 is not limited to this.

### Reference Signs List

- 1: Power storage module

- 10: Electrode laminate
- 11: Bipolar electrode (electrode)
- 12: Positive electrode terminal electrode (electrode)
- 13: Negative electrode terminal electrode (electrode)
- 15: Current collector
- 20: Sealing body
- 20sA: Outer side surface (injection port surface)
- 21: Sealing material (frame-shaped member)
- 22: Spacer (frame-shaped member)
- 24: End sealing material (sealing material, frame-shaped member)
- 27: Communication hole
- 50, 150, 250: Injected resin portion
- 51: Main body portion
- 53: Protruding frame portion
- 55: First overhang portion
- 57: Second overhang portion.

## Claims

1. A power storage module comprising:
an electrode laminate including a plurality of electrodes stacked in a first direction, the electrode laminate including a sealing body provided in such a way as to form internal spaces between the electrodes adjacent to each other and seal the internal spaces; and
an injected resin portion bonded to the sealing body, wherein
the plurality of electrodes includes a plurality of current collectors having rectangular shapes when viewed in the first direction,
the sealing body includes:
a welded end in which outer peripheral edges of a plurality of frame-shaped members stacked in the first direction are welded to each other while being interposed between the current collectors adjacent to each other in the first direction, the welded end surrounding the plurality of current collectors when viewed in the first direction and having four outer side surfaces extending in the first direction;
a first end surface and a second end surface, which are both end surfaces of the electrode laminate in the first direction;
an injection port surface, which is one of the four outer side surfaces and to which the injected resin portion is bonded; and
a plurality of communication holes through which an outside of the injection port surface communicates with each of the plurality of internal spaces,
the injected resin portion includes:
a main body portion having a plurality of openings connected to the plurality of communication holes, the main body portion partially covering the injection port surface;
a first overhang portion connected to the main body portion and partially covering the first end surface; and
a second overhang portion connected to the main body portion and partially covering the second end surface,
the main body portion includes a plurality of protruding frame portions protruding in a second direction intersecting the injection port surface, and
the plurality of protruding frame portions surrounds the plurality of openings when viewed in the second direction.

2. The power storage module according to claim 1, wherein
the injected resin portion includes a first thin portion connected to the main body portion and bonded to the injection port surface from the main body portion along the injection port surface, and
a thickness of the first thin portion in the second direction is smaller than a thickness of the main body portion in the second direction.

3. The power storage module according to claim 1 or 2, wherein
the injected resin portion includes a second thin portion connected to the first overhang portion and bonded to the first end surface from the first overhang portion along the first end surface, and
a thickness of the second thin portion in the first direction is smaller than a thickness of the first overhang portion in the first direction.

4. The power storage module according to any one of claims 1 to 3, wherein
the plurality of current collectors includes a first region provided at a center of the current collectors when viewed in the first direction and provided with active material layers, and a frame-shaped second region outside the first region, and
the frame-shaped members include:
a plurality of frame-shaped sealing materials provided in the second region of the plurality of current collectors; and
a plurality of spacers interposed between the sealing materials adjacent to each other in the first direction and defining, together with the plurality of sealing materials, the internal spaces between the current collectors adjacent to each other in the first direction.

5. A method for manufacturing a power storage module, the method comprising the steps of:
preparing an electrode laminate including a plurality of electrodes stacked in a first direction and having both end surfaces in the first direction as a first end surface and a second end surface;
providing a welded end on the electrode laminate such that internal spaces are formed between the electrodes adjacent to each other; and
providing an injected resin portion at the welded end, wherein
the plurality of electrodes includes a plurality of current collectors having rectangular shapes when viewed in the first direction, and
the step of providing the welded end includes a step of welding outer peripheral edges of a plurality of frame-shaped members stacked in the first direction while being interposed between the current collectors adjacent to each other in the first direction, and
an injection port surface, which is one of four outer side surfaces of the welded end opposite the internal spaces, has a plurality of communication holes communicating with the plurality of internal spaces, and
the step of providing the injected resin portion includes the steps of:
attaching a mold partially covering the injection port surface to the electrode laminate in such a way as to form a continuous molding space between, in the injection port surface, a main body region including the plurality of communication holes, a first overhang region connected to the main body region and partially extending on the first end surface of the electrode laminate, and a second overhang region connected to the main body region and partially extending on the second end surface of the electrode laminate; and
injecting a resin into the molding space of the mold attached to the electrode laminate.

6. The method for manufacturing a power storage module according to claim 5, wherein
in the step of attaching the mold, a first thin space connected to the molding space and extending from the molding space along the injection port surface is formed, and
a thickness of the first thin space in a second direction intersecting the injection port surface is smaller than a thickness, in the second direction, of the molding space in the main body region.

7. The method for manufacturing a power storage module according to claim 5 or 6, wherein
in the step of attaching the mold, a second thin space connected to the molding space and extending from the first overhang region along the first end surface is formed, and
a thickness of the second thin space in the first direction is smaller than a thickness, in the first direction, of the molding space in the first overhang region.

8. The method for manufacturing a power storage module according to any one of claims 5 to 7, wherein
the current collectors include a first region provided at a center of the current collectors when viewed from the first direction and provided with active material layers, and a frame-shaped second region outside the first region,
the frame-shaped members include:
a plurality of frame-shaped sealing materials provided in the second region of the plurality of current collectors; and
a plurality of spacers interposed between the sealing materials adjacent to each other in the first direction and defining, together with the plurality of sealing materials, the internal spaces between the current collectors,
the electrode laminate includes a plurality of separators disposed between the current collectors adjacent to each other in the first direction, the plurality of separators having outer edges disposed between the plurality of sealing materials and the plurality of spacers, and
in the step of attaching the mold, a region of the electrode laminate where the plurality of current collectors, the plurality of sealing materials, the plurality of spacers, and the plurality of separators overlap when viewed in the first direction is sandwiched by the mold.

9. The method for manufacturing a power storage module according to any one of claims 5 to 8, wherein
the mold includes a first mold and a second mold that sandwich the electrode laminate in the first direction, and
surface roughness of a surface of the first mold in contact with the electrode laminate and a surface of the second mold in contact with the electrode laminate is greater than surface roughness of a surface of the mold forming the molding space.
